(19) Europäisches Patentamt
European Patent Office
Office européen des brevets

(11) Publication number: 0 040 288
B1

(12) # EUROPEAN PATENT SPECIFICATION

(45) Date of publication of patent specification: **14.11.84**

(51) Int. Cl.$^3$: **C 09 D 3/80**, C 08 L 51/00, C 08 F 265/00

(21) Application number: **81100735.0**

(22) Date of filing: **20.12.78**

(60) Publication number of the earlier application in accordance with Art. 76 EPC: **0 002 801**

(54) **Coating, impregnating and adhesive compositions.**

(30) Priority: **29.12.77 US 865568**
**01.12.78 US 965673**

(43) Date of publication of application:
**25.11.81 Bulletin 81/47**

(45) Publication of the grant of the patent:
**14.11.84 Bulletin 84/46**

(84) Designated Contracting States:
**BE DE FR GB IT NL**

(56) References cited:
**FR-A-2 279 546**
**FR-A-2 284 654**

(73) Proprietor: **Rohm and Haas Company**
**Independence Mall West**
**Philadelphia, Pennsylvania 19105 (US)**

(72) Inventor: **Emmons, William David**
**1411 Holcomb Road**
**Huntingdon Valley, Pa. 19006 (US)**
Inventor: **Feely, Wayne Edmund**
**1172 Linsay Lane**
**Rydal, Pa. 19046 (US)**

(74) Representative: **Schön, Alfred, Dr. et al**
**Patentanwälte Müller-Boré, Deufel, Schön,**
**Hertel Lewald, Otto Isartorplatz 6 Postfach 26 02 47**
**D-8000 München 26 (DE)**

**EP 0 040 288 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with coating, impregnating and adhesive compositions comprising polymer containing a plurality of aldimine or ketimine groups and a material containing two or more acryloxy or methacryloxy groups, and the preparation and use of such compositions.

U.S. Patent No. 2,759,913 discloses the polymerization of organic compounds containing at least two ethylenic double bonds having in the $\alpha$-position to each double bond a carbonyl group of an aldehyde, ketone, acid, ester or amide group with a compound containing at least two active hydrogen atoms such as an amino group as is present, for example, in ethylene diamine or piperazine, or a hydroxyl group as is present, for example, in ethylene glycol or Bisphenol A.

U.S. Patent No. 3,845,056 discloses the production of amine acrylates by reaction of a diacrylate ester such as the diacrylate ester of diethylene glycol with an organic amine such as piperazine followed by radiation cure to give coatings.

U.S. Patents Nos. 3,876,518, 3,878,077 and 4,016,059 disclose radiation curable compositions comprising urethane derivatives of acrylated epoxidized soybean or linseed oils which have been partially pre-reacted with aliphatic secondary amines and the use of these compositions to produce coatings and inks.

U.S. Patent No. 4,058,657 discloses curable composition comprising a liquid amine-terminated polymer and a vinylidene-terminated polymer. The amine is preferably heterocyclic and contains at least two primary or secondary amino groups. The vinylidene polymers may be prepared by reacting either polymer containing terminal functional groups with a compound containing oxirane and vinylidene groups or polymer containing terminal epoxy groups with (meth)acrylic acid.

U.S. Patents Nos. 3,925,181, 4,037,018 and 4,096,105 disclose coating compositions in aqueous dispersions for producing curable films on a substrate. The compositions comprise (1) a polymer having at least 5% by weight of pendant primary and/or secondary amine groups which are protonated with acid to render the polymer water dispersible and (2) at least 5% by weight of said polymer of bismaleamide, ethylene glycol di(meth)acrylate or N,N-methylene bis acrylamide crosslinker.

We have now found certain compositions which may provide durable coatings having excellent mechanical and resistance properties even on ambient curing. The curing may be accelerated, if desired, by heating.

In accordance with the present invention a composition suitable for coating, impregnating, and/or bonding purposes, is characterized by comprising

(1) at least one vinyl addition polymer containing a plurality of aldimine or ketimine groups pendant and/or terminal from units in the polymer chain;

(2) at least one material containing at least two acryloxy or methacryloxy groups of the formula:

$$H_2C{=}C(R)C(O){-}O \qquad (I)$$

where R is H or $CH_3$;

(3) optionally, at least one volatile ketone or aldehyde stabiliser containing from 3 to 10 carbon atoms; and

(4) optionally, at least one compound of the formula:

$$H_2C{=}C(R)X \qquad (II)$$

wherein R is H or $CH_3$ and X is an electron withdrawing group.

The ester groups of formula I are herein designated acryloxy or methacryloxy groups depending on whether R is H or $CH_3$. The term (meth)acryloxy is intended herein to be generic and to embrace either or both of the specific groups. While both groups or moieties of formula I are amenable to ambient cure, it has been found that the specific acryloxy group favours cure at lower ambient temperature and for that reason the component 2) above is preferably a compound containing at least two acryloxy groups.

Component (1) above may be referred to herein as an imine-containing polymer for simplicity, but it is to be understood that this is intended to embrace component (1) polymers containing imine groups, i.e. aldimine and ketimine groups, or the salts of such groups with acids, except where the context is clearly and completely inconsistent with such broader construction. Component (1) is a vinyl addition polymer which is preferably uncrosslinked and linear (the term "linear" being construed to include branched as well as straight chain linkages), or a mixture of such polymers, which may have an average molecular weight from as low as about 600 number average ($\overline{M}_n$) to several hundred thousand number average ($M_n$), e.g. 300,000 or higher. For many purposes, the imine-containing polymer is preferably one having a low molecular weight (e.g. up to 15,000 $\overline{M}_n$) and in some cases having sufficient hydrophilic groups, e.g. —$NH_2$, —NHR (R being lower alkyl), —OH, —COOH, or depending on pH the carboxyl may be in the form of amine, alkali metal, or ammonium salts, e.g. —$COONH_4$, to render this component water-dispersible or even water-soluble. On the other hand, the imine-containing polymers may be of intermediate to moderately higher molecular weight, e.g. 30,000 to

300,000 number average and range in soluble nature from water-soluble to organic solvent soluble. The coating/impregnating compositions of the invention may also comprise a vehicle and it is desirable that the polymer be soluble therein.

The addition polymers constituting component 1) may be made by direct vinyl addition polymerization of a monoethylenically unsaturated monomer containing an amine precursor group if suitable conditions are maintained during the polymerization. Thus, acid salts of the amine-group containing monomer, such as aminoethyl (meth)acrylate hydrochloride, may be polymerized, or the "blocked amine" monomers of ketimine or aldimine types disclosed in U.S. Patents 3,037,969 and 3,497,485 may be polymerized to produce the component 1).

Alternatively, a component 1) polymer may be made by making an addition polymer of one or more (meth)acrylic esters, having the molecular weight desired and subjecting the ester polymer to aminolysis (amidation) by means of a polyamine, especially an aliphatic polyamine, having at least two amine groups, at least two of such amine groups being primary or secondary. Primary amines in the amidation products may be converted to imine groups by reaction with ketone or aldehyde.

In those embodiments wherein component 1) is of low molecular weight, e.g. 600 to 15,000, preferably 600 to 1000 more preferably 1000 to 5000, number average ($\overline{M}_n$), low molecular weight polymers containing (meth)acrylic acid esters, or such polymers also containing polymerized units of other monoethylenically monomers, especially those selected from ($C_2$ to $C_{20}$)alpha-olefins, e.g. ethylene, propylene, and propylene-trimer, styrene, vinyltoluene, acrylic acid, methacrylic acid, and (meth)acrylonitrile may first be prepared and the polymer of (meth)acrylate ester units may then be reacted with a polyamine, such as ethylenediamine or diethylenetriamine, to convert ester units into amino-amide units.

Thus, component 1) may be derived from the aminolysis product of a lower ($C_1$—$C_4$) alkyl (meth)-acrylate polymer, e.g. having a number average ($\overline{M}_n$) molecular weight of 600 to 15,000 preferably of a methyl acrylate (MA) copolymer in which the molar proportion of MA is from 2 to 35% and the comonomer(s) making up the balance of the copolymer may be composed of mers (polymerized units) of one or more monoethylenically unsaturated monomeric compounds having a group

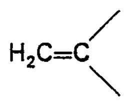 ,

such as methyl methacrylate, ethyl acrylate or methacrylate, a ($C_3$—$C_{18}$)alkyl (meth)acrylate, e.g. butyl acrylate or methacrylate, hexyl acrylate or methacrylate, 2-ethylhexyl acrylate or methacrylate, styrene, vinyltoluene, ethylene (or other $\alpha$-olefin), acrylonitrile, hydroxyethyl acrylate or methacrylate, and, in limited amounts, acrylic acid or methacrylic acid.

The proportion of methyl acrylate, since it is the (meth)acrylate most susceptible to aminolysis may be, and is preferably, predetermined to provide sufficient ester mer units in the polymer available for aminolysis, to assure that the desired amount of amino groups are introduced by the aminolysis procedure. The other monomers may be selected on the basis of their contributions of hydrophobicity, flexibility, hardness, durability to weathering, e.g. ultraviolet light stability, resistance to water and other solvents, such as gasoline. If desired, ethyl acrylate or even a higher alkyl acrylate may be used as the aminolysis-susceptible component of the starting polymer-alternatively methyl methacrylate or higher methacrylate may be so used.

The polyamine used for the aminolysis should contain at least two primary or secondary amine groups and the nitrogen atoms should be attached to aliphatic carbon atoms rather than aromatic carbon atoms. Representative polyamines useful for the aminolysis are:

ethylenediamine (EDA)
diethylenetriamine (DETA)
trimethylenediamine
triethylenetetramine (TETA)
pentamethylenediamine
tetraethylenepentamine (TEPA)
hexamethylenediamine
menthanediamine
4,4′-methylenebis (cyclohexylamine)
bis(aminomethyl)-cyclohexane
piperazine
N-aminoethylpiperazine
tris-(aminoethyl)amine
propylenediamine (PDA)
dipropylenetriamine (DPTA)
tripropylenetetramine (TPTA)
1,3-butylenediamine
1,4-butylenediamine

N-(aminoethyl)-ethanolamine

A preferred class of polyamines in respect to availability, effectiveness and economy are those of the formula

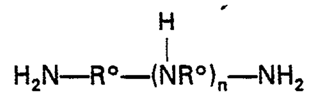

(III)

wherein R° is an alkylene group having 2 to 3 carbon atoms and n is 0, 1, 2 or 3. Of this class, ethylenediamine generally provides optimum results, but 1,3-propylene diamine is also preferred.

Thus, component 1) may be derived from a vinyl addition polymer, especially a copolymer, having a molecular weight up to several hundred thousand viscosity average, preferably of lower molecular weight in the range of number average molecular weight ($\overline{M}_n$) from 600 to 15,000, even up to 20,000, and containing from 2 to 95, preferably from 2 to 35, mole percent of (meth)acrylamide mers or units in which the amide nitrogen atom is substituted by an aliphatic hydrocarbon group carrying one or more primary or secondary amino groups, the hydrogen atoms of such amino groups being available for reaction with (meth)acryloxy groups of monomeric or polymeric compounds of polyfunctional character in respect to their content of (meth)acryloxy groups of formula I above.

These amino-amide units, if a polyamine of the preferred class of polyamine reactants set out under formula III above is used, may have the general formula

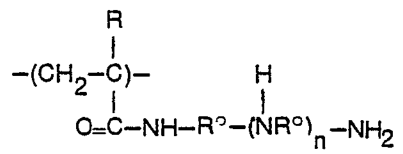

(IV)

and in the specific instance wherein ethylenediamine is the reactant used and the ester units in the polymer that are aminolyzed are alkyl (meth)acrylate units, the amino-amide units in the aminolyzed polymer have the specific structure of the formula

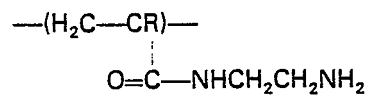

(IVA)

wherein R is H or $CH_3$.

As part or all of the component 1) polymer, there may be used, as stated hereinabove, a vinyl addition polymer or copolymer containing aldimine or ketimine groups obtained by polymerization of the monomeric (meth)acryloxyalkyl ketimines or aldimines of formulas, I, II and III of U.S. Patent 3,037,969 or the (meth)acryloxyalkyloxyalkyl ketimines or aldimines of formula I, U.S. Patent 3,497,485.

Thus, polymer (i) may contain units of monomer having at least one of the following formulae:

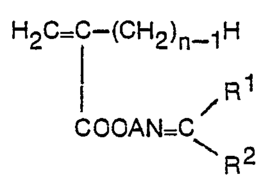

(V)

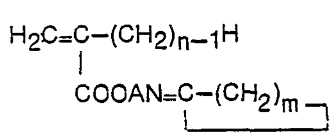

(VI)

and

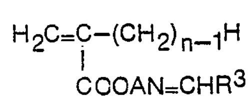

(VII)

where

m is an integer having a value of 4 to 5,

n is 1 or 2,

A is a $C_2$—$C_{12}$ alkylene group,

$R^1$ is a ($C_1$—$C_{12}$)alkyl or a cycloalkyl group,

$R^2$ is a ($C_1$—$C_{12}$) alkyl or a cycloalkyl group, and

$R^3$ is phenyl, halophenyl or alkoxyphenyl in which the alkoxy group has one to four carbon atoms; and

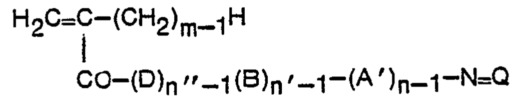 (VIII)

wherein:

Q is

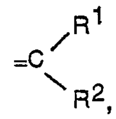 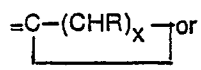 or $=CHR_3$

R is H or it may be methyl in one CHR unit,

$R^1$ is ($C_1$—$C_{12}$) alkyl or cyclohexyl,

$R^2$ is ($C_1$—$C_{12}$) alkyl or cyclohexyl,

$R^3$ is phenyl, halophenyl, ($C_1$—$C_{12}$)alkyl, cyclohexyl or ($C_1$—$C_4$)alkoxyphenyl,

A′ B, and D are the same or different oxyalkylene groups having the formula

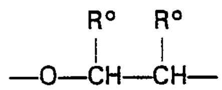

each R° being the same or different and H or alkyl having 1 or 2 carbon atoms,

m is 1 or 2,

x is an integer having a value of 4 to 5,

n is an integer having a value of 1 to 200,

n′ is an integer having a value of 1 to 200, and

n″ is an integer having a value of 1 to 200, the sum of n—1, n′—1, and n″—1 having a value of 2 to 200.

Preferred compounds are those of the Formula (VIII) in which the sum of n—1, n′—1, and n″—1 have a value of 2 to 10.

These imine-containing polymers are in effect, polymers containing blocked primary amine groups. Hence, they provide longer pot-life times since their operation depends on liberation and evaporation of the aldehyde or ketone from the imine nitrogen. Both of these patents disclose the mixing of copolymers containing 5 to 25% by weight of an aldimine or ketimine with polyepoxides to produce insoluble and infusible cross-linked coatings. They do not, however, disclose or suggest the cold-curing reaction of the present invention which requires that component 2) used herein contains a polyfunctional unsaturated compound having at least two (meth)acryloxy groups of formula I. The resulting products are quite distinct.

Component 2) of the compositions of the present invention for coating, impregnating, and adhesive purposes consists essentially of one or more polyfunctional compounds of monomeric or polymeric (condensation, addition, or vinyl addition types) character containing two or more unsaturated (meth)acryloxy groups of formula I hereinabove. Of these, the specific acryloxy groups are preferred. It has been found that the primary amine groups developed from imine groups in component 1), undergo, even at ambient temperature, addition across the double bond of the (meth)acryloxy units of component 2). The concurrent addition reaction of an amino group of each of several molecules of component 1) to (meth)acryloxy units of a polyfunctional component 2) compound serves to crosslink component 1) and thereby to cure the composition containing both components.

By the term "polyfunctional (meth)acrylate", it is intended herein to refer to compounds containing two or more unsaturated (meth)acryloxy groups. Examples of such compounds that are useful as part or all of component 2) are:

ethylene glycol diacrylate
diethylene glycol diacrylate
propylene glycol diacrylate
trimethylene glycol diacrylate
neopentyl glycol diacrylate
1,3-butylene glycol diacrylate
1,4-butylene glycol diacrylate
1,6-hexamethylene glycol diacrylate
1,10-decamethylene glycol diacrylate

trimethylolpropane triacrylate
pentaerythritol tetraacrylate, and
pentaerythritol triacrylate.

There may also be used more complex types of polyfunctional (meth)acrylates obtained by reaction of a (meth)acryloxy-containing compound, such as (meth)acrylic acid, (meth)acrylyl halide, or a (meth)acrylic acid ester, with various compounds, such as hydroxy-containing alkyd resins, polyester condensates, or polyether condensates. These complex acrylated products may in some instances be termed "polymeric", since the (meth)acryloxy groups may be joined to a condensation polymer, e.g. a polyester or a polyurethane, to an addition polymer, e.g., a polyether, or to a vinyl addition polymer, e.g. a glycidyl acrylate polymer. Examples include:

A) Urethane (meth)acrylates obtained by reacting isocyanate groups of a polyisocyanate, such as hexamethylene diisocyanate with a hydroxyalkyl (meth)acrylate, e.g. hydroxyethyl acrylate. These polyurethane poly(meth)acrylate monomers are disclosed in U.S. Patent 3,297,745:

The monomers are prepared by reacting an organic diisocyanate such as toluene diisocyanate

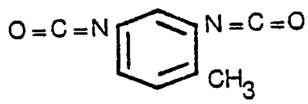

with an ethylenically unsaturated alcohol having the empirical formula

$$R_2CH{=}\overset{R_1}{\overset{|}{C}}AOH$$

wherein:

$R_1$ is selected from the class consisting of —H and —$CH_3$;
$R_2$ is selected from the class consisting of —H; —$CH_3$; and —$C_6H_5$; and
A is a divalent organic radical selected from the class consisting of

$$-CH_2-;\ -\underset{\underset{O}{\|}}{C}OCH_2\underset{\underset{R_3}{|}}{CH}-;\ \text{and}\ -CH_2OCH_2\underset{\underset{R_3}{|}}{CH}-;$$

wherein $R_3$ is selected from the class consisting of

$$-H;\ -(CH_2)_nCH_3;\ -CH_2Cl;\ -CH_2O\underset{\underset{O}{\|}}{C}R_4;\ -CH_2O\underset{\underset{O}{\|}}{C}\underset{\underset{R_1}{|}}{C}{=}CHR_2;\ -CH_2OR_4-\ \text{and}\ -CH_2OCH_2CH{=}CHR_2$$

wherein:

n is an integer from zero to ten; and

$R_4$ is selected from the class consisting of phenyl and halogenated phenyl radicals, alkyl and halogenated alkyl radicals having from one to two carbon atoms, benzoxy, phenoxy and halogenated benzoxy and phenoxy radicals.

For each mol of the diisocyanate, two mols of the ethylenically unsaturated alcohol are utilized. The reactants are mixed and heated to a temperature above ambient room temperature, preferably below 200°C. Usually the exothermic heat of reaction will be sufficient to complete the reaction. Where the reactants are solids, a suitable inert solvent may be employed such as benzene, toluene, xylene. The reactants are maintained at a reaction temperature until substantial completion of the reaction is indicated by a reduction of the —N=C=O content to substantially zero.

The resulting monomer contains two urethane linkages and at least two ethylenically unsaturated carbon-to-carbon linkages:

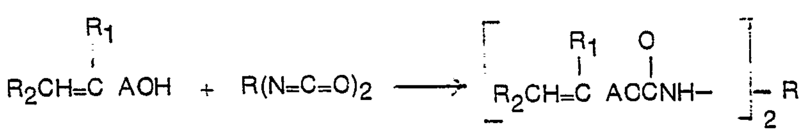

wherein R is a divalent organic radical. In the preferred monomers, the ethylenically unsaturated linkages are terminal groups

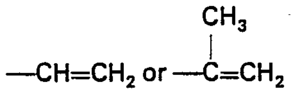

yielding divinyl monomers, i.e., the $R_2$ radical is hydrogen. Where the ethylenically unsaturated alcohol contains two ethylenically unsaturated carbon-to-carbon linkages, the resulting monomer will contain four ethylenically unsaturated linkages.

B) Polyether (meth)acrylates obtained by esterification of hydroxy-terminated polyethers with acrylic or methacrylic acid as disclosed in U.S. Patent 3,380,831:

Branched chain polyol polyether polyesters of alpha-methylene carboxylic acids of 3—4 carbons contain the three radicals represented by the formula

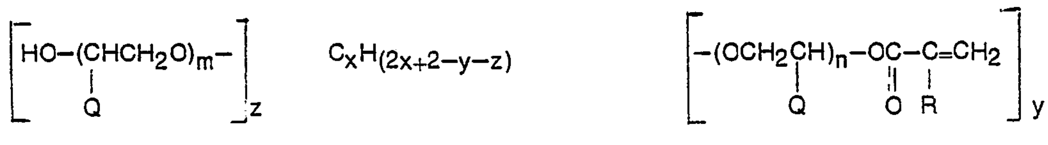

$C_xH_{(2x+2-y-z)}$

free hydroxyl chain end

polyhydric alcohol carbon skeleton

alkylene oxide chain extender

addition polymerizable ester chain end

wherein:

Q is H, $CH_3$ or $C_2H_5$,
R is H or $CH_3$,
x is 3, 4, 5 or 6 and is equal to or greater than y+z,
y is 2, 3, 4, 5 or 6,
z is 0, 1, 2, 3 or 4 and y+z is greater than 2,
m is 0, 1 or more, and
n is 1 or more.

The polyhydric alcohol skeleton may be derived from such compounds as trimethylolpropane, glycerol, the penitols, e.g., pentaerythritol; and the hexitols, e.g., d-mannitol and d-sorbitol. Other polyfunctional compounds capable of reaction with alkylene oxides may be used. Ethylene oxide and propylene oxide may be used as chain extenders and also as chain terminators containing free hydroxyl groups. Acrylic acid and methacrylic acid are suitable alpha-methylene carboxylic acids for providing addition polymerizable ester chain ends.

C) Polyesters having at least two (meth)acrylate groups obtained by esterifying hydroxyl groups with (meth)acrylic acid as disclosed in U.S. Patent 3,935,173:

Oligo(meth)acrylates having a (meth)acroyl group equivalent of not more than 1000 and being prepared by esterifying (1) a polyhydric alcohol, (2) a polycarboxylic compound selected from the group consisting of a polycarboxylic acid and the anhydride thereof, said polyhydric alcohol and polycarboxylic compound not being a dihydric alcohol and dicarboxylic compound respectively at the same time, and (3) (meth)acrylic acid to produce the oligo(meth)acrylate and polyol poly(meth)acrylates prepared by esterifying a polyhydric alcohol and (meth)acrylic acid to produce the polyol poly(meth)acrylate.

D) Polyfunctional (meth)acrylates disclosed in U.S. Patent 3,560,237, e.g. obtained by reaction of a hydroxyalkyl (meth)acrylate, e.g. hydroxyethyl acrylate, with any one of:

a) Dicarboxylic acids having from 4 to 15 carbon atoms,
b) Polyepoxides having terminal glycidyl groups,
c) Polyisocyanates having terminal reactive isocyanate groups:

Vinyl ester resins made by reacting:

(1) A polyfunctional material selected from the group consisting of (a) dicarboxylic acids having from 4 to 15 carbon atoms, (b) polyepoxides having terminal, reactive glycidyl groups or (c) polyfunctional isocyanates having terminal, reactive isocyanate groups, with

(2) 2-hydroxylalkyl acrylates or methacrylates.

E) (Meth)acrylate-terminated polyesters made from (meth)acrylic acid, a polylol having at least three hydroxyl groups, and a dicarboxylic acid (U.S. Patent 3,567,494):

Polymerizable ester prepared by the co-condensation of acrylic acid and a dicarboxylic acid selected from alpha-unsaturated, alpha, beta-dicarboxylic acids having 4 to 5 carbon atoms, and saturated aliphatic dicarboxylic acids having 3 to 12 carbon atoms with a polyhydric alcohol having at least 3 esterifiable hydroxyl groups on adjacent carbon atoms, 45% to 95% of the hydroxyl groups being esterified with the acrylic acid, and 5% to 55% of the hydroxyl groups being esterified with the dicarboxylic acid.

F) Poly(meth)acrylates obtained by the reaction of (meth)acrylic acid with at least two epoxy groups of epoxidized drying oils, such as soybean oil, linseed oil, and the like, e.g. epoxidized corresponding drying oil fatty acid, an ester or amide thereof, or the corresponding alcohol, containing

at least 2 epoxy groups. Such polyfunctional (meth)acrylates are disclosed in U.S. Patent 3,125,592:

Polymerizable vinylated monomer which comprises reacting a epoxidized ester of an alcohol and a higher aliphatic carboxylic acid with a vinyl aliphatic monocarboxylic acid of the formula

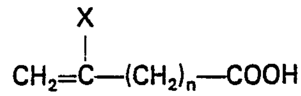

wherein n is an integer ranging from 0 to 2 and X is a group selected from the class consisting of hydrogen, lower alkyl, phenyl, benzyl, halogen, cyano and $-CH_2-COO$ (alkyl) in the presence of phenolic free radical inhibitor and of gaseous oxygen, said inhibitor and oxygen cooperating to inhibit vinyl polymerization, said higher aliphatic carboxylic acid having a chain of 10—24 carbon atoms, whereby said epoxidized ester is acylated with the carboxyl group of said vinyl acid at an oxirane segment

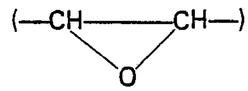

Preparation of the vinylated long chain compounds is typified by the reaction of one mol of acrylic acid with one mol of the 2-ethylhexyl ester of 9,10-epoxystearic acid according to the following equation:

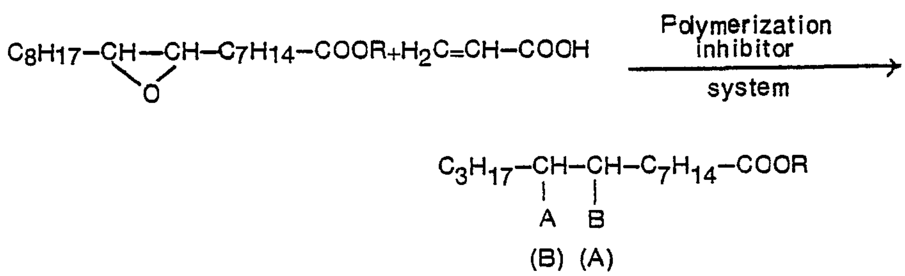


where A is hydroxy, B is acryloxy, and R is 2-ethylhexyl. A mixture of the 2-ethylhexyl esters of 9-acryloxy-10-hydroxystearic acid and 9-hydroxy-10-acryloxystearic acid is obtained because the carbon-oxygen bonds in the oxirane ring are opened singly and randomly by the carboxyl group of the acrylic acid.

G) Poly(meth)acrylates which are urethane or amine derivatives of the poly(meth)acrylated epoxidized drying oils, fatty acids and the like described in F) and U.S. patent mentioned therein, obtained by the reaction of isocyanate(s) or amine(s) respectively with the poly(meth)acrylated epoxidized drying oils, fatty acids, and the like described in U.S. Patent 3,125,592. The urethane and amine derivatives retain some or all of the (meth)acrylate groups and are disclosed in U.S. Patents 3,876,518 and 3,878,077:

In the reaction of the acrylated epoxidized soybean oil compound with an amine compound, the amine compound is preferably a secondary amine of the formula $R_2'NH$, wherein each R′ can be substituted or unsubstituted alkyl having from 1 to about 15 carbon atoms, or an aryl group having up to 15 carbon atoms, (or an aryl group having up to 15 carbons,) or the $R_2'$ unit together with the nitrogen atom of the NH group forms a ring structure having 5 or 6 ring atoms.

Illustrative thereof one can mention dimethylamine, diethylamine, dibutylamine, dioctylamine, di-2-ethylhexylamine, diphenylamine, N-methyl-N-phenylamine, morpholine, piperidine, pyrrolidine, and the like. In this reaction the amine compound adds across the double bond of the acrylyl unit of the acrylated epoxidized soybean oil compound to produce a compound containing the group

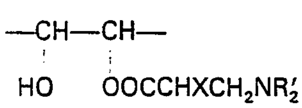

The urethane derivatives of the acrylated epoxidized soybean oil and the amine derivatives of the acrylated epoxidized soybean oil are preferred.

Thus, the urethane derivatives of the acrylated epoxidized soybean oil contain the group

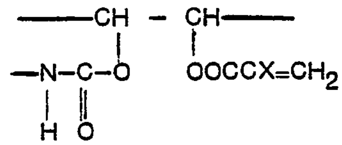

H) Poly(meth)acrylates obtained by reaction of (meth)acrylic acid by addition to the epoxy groups of aromatic bisphenol-based epoxy resins as disclosed in U.S. Patent 3,373,075:

The formula

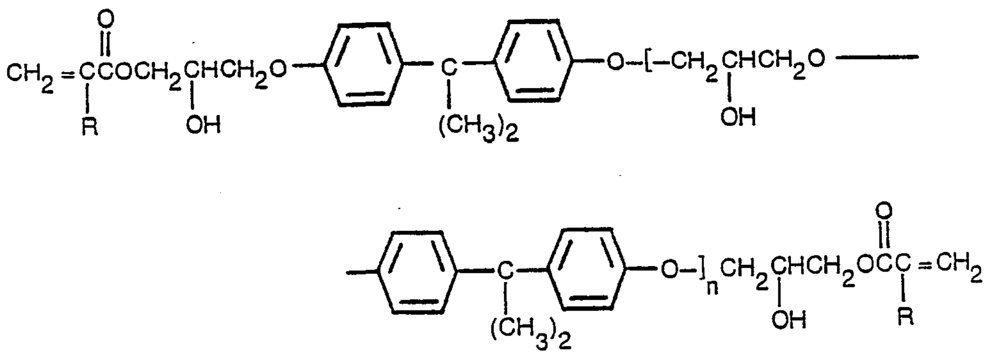

wherein R is a substituent selected from the class consisting of hydrogen, methyl and ethyl radicals and n is an integer from zero to twenty, represents diacrylates which are preferably prepared by reaction of a diglycidyl ether or polyglycidyl ethers of Bisphenol A with two mols of a carboxylic acid selected from the class consisting of acrylic, methacrylic and ethacrylic acids.

I) Poly(meth)acrylates obtained by the addition of (meth)acrylic acid to a linear vinyl polymer having pendant glycidyl groups, e.g. polymers of glycidyl (meth)acrylate or of vinyl glycidyl ether or vinyl glycidyl sulfide as disclosed in U.S. Patent 3,530,100:

The polymers disclosed in this patent have a plurality of repeating units of the formula

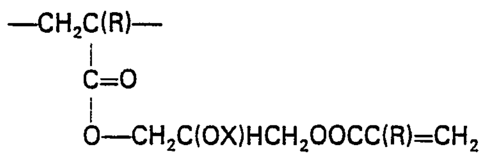

wherein

R is hydrogen, methyl, chloro or cyano and

X is hydrogen, an acyl radical or a urethane radical.

J) Polyfunctional (meth)acrylates derived from (meth)acrylic acid anhydride and polyepoxides as disclosed in U.S. Patent 3,676,398:

The reaction product of a polyepoxide containing at least two epoxy groups,

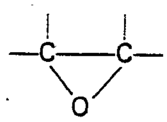

in its structure with an acryloyl carboxylic acid anhydride of the formula

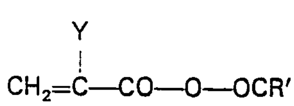

The reaction of the epoxy groups in the polyepoxides with these anhydrides yields the diester derivatives,

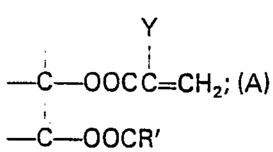

Accordingly, the monomeric reaction product contains at least two groups represented by structure (A), in which Y represents H, $CH_3$, Cl, Br, and CN; R′ represents H, a group which is essentially hydrocarbon containing one to 20 carbon atoms, and a halogenated derivative of the said hydrocarbon group.

K) Polyfunctional (meth)acrylate urethane esters obtained from the combining of hydroxyalkyi (meth)acrylates, a diisocyanate, and a hydroxyl functional alkyd condensate as disclosed in U.S. Patent 3,673,140:

The reaction product of

1. an alkyd formed from trimethylol propane, tall oil fatty acid, and adipic acid with
2. the reaction product of toluene diisocyanate and the monoacrylic acid ester of ethylene glycol.

L) (Meth)acrylate terminated urethane polyesters obtained by reaction of a polycaprolactone diol or triol with an organic polyisocyanate, e.g. a diisocyanate, and a hydroxyalkyl (meth)acrylate. Such products are disclosed in U.S. Patent 3,700,643:

Unsaturated acrylate-capped polycaprolactone polyol derivatives are produced having terminal acrylyl groups and at least one polycaprolactone polyol chain residue in the molecule. In one of its simplest forms the final product can be the reaction product of a polycaprolactone diol an organic isocyanate and hydroxyethyl acrylate.

M) Urethane poly(meth)acrylates obtained by reaction of a hydroxyl-containing ester of a polyol with (meth)acrylic acid and a polyisocyanate, such as those described in U.S. Patent 3,759,809:

The product of the reaction of (a) a polyfunctional polyethylenically unsaturated monomeric ester having free hydroxyl groups and formed by the reaction of an ethylenically unsaturated acid and a polyhydric alcohol with (b) an organic isocyanate, the isocyanate-modified ester product having a hydroxyl number of 15 to 70.

N) A simple ester obtained by the reaction of a polyol having at least two hydroxyl groups with acrylic acid or methacrylic acid, preferably trimethylolpropane triacrylate or a poly(200)ethylene glycol dimethacrylate.

The disclosure in the patents mentioned above in each of paragraphs A) through M) are incorporated herein by reference insofar as they disclose the poly(meth)acryloxy-containing compounds and the processes of making them.

Preferred polyfunctional unsaturated compounds of the "complex" type above for use in component 2) are the acrylic acid adducts to polyepoxides in which the epoxy group is attached to adjacent carbon atoms, that is the epoxy groups in a vic-epoxy group. The polyepoxide may be any epoxidized vegetable or animal oil having ten or more carbon atoms in the fatty acid component and sufficient unsaturation to provide at least two epoxy groups in the epoxidized oil. Drying oils or semi-drying oils such as linseed oil soybean oil are especially useful for epoxidation and subsequent acrylation. The polyepoxide to be acrylated may be any resin-forming polyepoxide having at least two terminal groups of the formula,

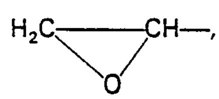

obtainable by reacting epichlorohydrin and a polyhydroxy phenol or an aliphatic diol or polyol, e.g. Bisphenol A, glycerol, glycol, diethylene glycol, hexamethylene glycol and the like. Low molecular weight vinyl addition copolymers of glycidyl vinyl ether and of glycidyl (meth)acrylate may also be acrylated to form acrylated polyepoxides of component 2).

The relative proportions of components 1) and 2) may fall within a wide range depending upon the particular composition of each of the components. In general, the amount of unsaturated poly(meth)acrylate or poly(meth)acryloxy compound (component 2)) that is used is sufficient to react with primary or secondary amine groups provided by component 1) to result in crosslinking upon ambient or elevated-temperature cure to whatever extent is desired or needed to obtain the balance or combination of mechanical and resistance properties. The ratios of component 2) to component 1) advantageously may fall in the range of 0.5 to 3.5 equivalents of unsaturated (meth)acryloxy groups in component 2) per equivalent of amine nitrogen (primary and secondary total) in component 1). Preferably they are present in proportions providing 1.5 to 2 (meth)acrylate unsaturation equivalents of component 2) for each equivalent of reactive hydrogen-containing amine in component 1).

Besides imine groups in component 1) there may also be other hydrophilic groups or linkages depending on the composition of the copolymer and the polyamine used in aminolysis and the procedure used in aminolysis. Thus the initial copolymer may contain hydroxyl or carboxyl groups (for optimum results, the equivalents of amine nitrogen in the copolymer should exceed the equivalents of carboxyl, if any, therein), the polyamine may contain two primary amine groups, one of which on aminolysis converts the acrylic ester linkage to an acrylic amide linkage in which the amide nitrogen carries one unsubstituted hydrogen and an amino-containing substituent which may contain not only a terminal primary or secondary amino nitrogen, but also one or more intermediate secondary amino

groups or even pendant hydroxyl groups. In addition, a relatively small, but significant amount of carboxyl groups may be introduced into the polymer if aminolysis is not carried out under essentially anhydrous conditions. Having some content of hydrophilic groups, as those mentioned may be desirable in the cured films and to the extent they are felt to contribute desirable properties to the cured film, their presence may be tolerated or even favored by taking deliberate steps to introduce them.

Such hydrophilic groups may be particularly desirable when the coating system is to be dispersed or dissolved in aqueous media.

In a modified embodiment of the invention, a portion of the reactive amine content of the component 1) polymer may be reacted with a monoethylenically unsaturated compound of formula II, such as a (meth)acrylonitrile, a (meth)acrylamide or a mono(meth)acrylate such as an alkyl (meth)acrylate. This may be carried out before the polyfunctional (meth)acrylate is mixed with the imine-containing polymer constituting component 1). Alternatively, part or all of the monofunctional unsaturated compound, such as mono (meth)acrylate, may be added to the polyfunctional (meth)acrylate of component 2) whereby such component 2) contains both a monofunctional unsaturated compound of formula (II) and polyfunctional (meth)acrylate which react simultaneously with the amine groups provided by component 1).

This use of a monofunctional unsaturated compound reduces the amount of reactive amine that is available for reaction with the polyfunctional unsaturated (meth)acrylate of component 2) and provides for greater versatility in producing products having a variety of desired properties in the coatings systems of the present invention, e.g. pot-life extension, coating gloss, hydrophobicity, coefficient of friction, surface content angle, etc.

The general class of monofunctional unsaturated compounds that may be used to reduce the amount of active hydrogen on primary or secondary amine groups provided by the imine-containing polymer to be used as component 1) may be a compound of the general formula:

$$H_2C{=}C(R){-}X \qquad (II)$$

wherein R is H or $CH_3$, preferably being H, and

X is an electron-withdrawing group, such as a group selected from —CN, —CON($R^2$)($R^3$), and —COO$R^4$, $R^2$ being H or ($C_1$ to $C_{20}$)alkyl, $R^3$ being H or $C_1$—$C_{20}$ alkyl and $R^4$ being selected from ($C_1$—$C_{20}$)alkyl groups which may be substituted with halogen atoms, such as the specific compounds: a mixed ($C_{16}$—$C_{20}$)alcohol acrylate, isobornyl acrylate and hexafluoroisopropyl acrylate. Examples of such compounds include acrylonitrile, alkyl (meth)acrylates, (meth)acrylamides and N-alkyl-substituted-(meth)acrylamides.

When a primary amine group in the polymeric component 1) takes on a single unsaturated compound of formula (II), the production of reaction product may be represented by the equation:

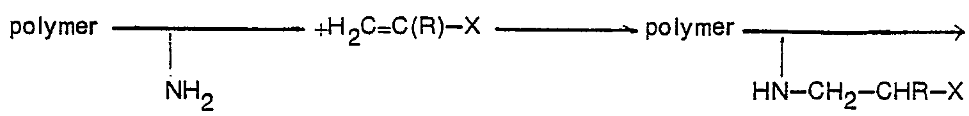

When the same addition occurs with a secondary amine group on the component 1) polymer, the active hydrogen on the secondary amine nitrogen is replaced by a group —$CH_2$—CHR—X and is no longer available for crosslinking by component 2). Therefore, the amount of monofunctional compound of formula II should not be so great as to eliminate so many of the active hydrogen atoms on primary or secondary amine nitrogen atoms as to preclude adequate addition of component 1) polymer across the double bonds of the polyfunctional component 2) to crosslink the composition to the extent necessary to provide the desired mechanical and resistance properties in the cured products. The same range of ratios of component 2) to component 1) (0.5 to 3.5 equivalents of unsaturated groups in component 2) per equivalent of amine (primary and secondary total) in component 1)) is applicable to the situation when component 2) contains both monofunctional and polyfunctional unsaturated compounds, provided that the latter compound supplies at least 0.5, and preferably 1.5 to 2 (meth)acryloxy unsaturation equivalents per equivalent of amine nitrogen in component 1). If part or all of the monofunctional unsaturated compound of formula II is first reacted with the amine-containing component 1), the resulting reduction of reactive amine content in the component 1) polymer should be taken into consideration when subsequently determining the ratio used in reacting component 2) with component 1).

The component 2) not only serves to crosslink the composition but it may also be selected to alter the properties of the final cured product. This is especially true when one of the more "complex" polyfunctional (meth)acrylates, such as those mentioned in the paragraphs above-identified by the letters A) to N) is used in the composition. In addition, a monofunctional compound of formula II may be selected with the intention to provide modified properties of the cured product. There may also be used as component 2) a mixture of two or more of the polyfunctional unsaturated (meth)acrylates, again for the purpose of crosslinking and also modifying the final mechanical, optical, and chemical resistance properties.

Component 2) may include a vinyl addition polymerization inhibitor, such as hydroquinone, in small amounts, such as 0.01 to 0.2% by weight of the component.

The compositions comprising the imine-containing polymer or polymers making up component1) and the polyfunctional (meth)acryloxy crosslinking compounds constituting component 2) have room temperature pot stability considerably longer than compositions containing the corresponding amine polymer which has a stability of 15 minutes to several days depending on the particular amine-containing polymer(s) used for component 1) and the particular unsaturated poly(meth)acrylate(s) used therein. The stability of the imine group-containing polymers can be enhanced by storage at temperatures below normal ambient temperatures, such as 10°C to less than −10°C. Similarly, the stability is generally extended in duration at any given temperature when an appreciable amount of a reaction retardant, such as a volatile ($C_3$ to $C_{10}$) ketone or aldehyde, e.g. acetone benzaldehyde or butyraldehyde, is added to the composition containing both components 1) and 2) or when such composition is also diluted in effect by the addition of various materials needed to provide modifications of luster, colour, and the like, such as fillers, pigments.

The volatile stabiliser that retards the reaction may be used in various amounts of 0.5 to 80% by weight, based on the total weight of the two reactive components 1) and 2). However, the stabiliser may also serve as a part, or in some instances, as the entire vehicle or solvent medium for the coating compositions. Thus, acetone, cyclohexanone, methyl ethyl ketone, methyl butyl ketone, diethyl ketone, methyl hexyl ketone, benzaldehyde, or isobutyraldehyde, may be used in low quantities or proportions of about 0.5 to 3% by weight or even in larger quantities to serve as a component of the vehicle or as the entire solvent component of the vehicle.

The presence of a small amount of ketone or aldehyde as just described apparently is in equilibrium with primary amine groups provided by component 1). Much greater stability is obtained when substantially all of the primary amine groups are converted by chemical reaction (and removal of liberated water) of these groups with any $C_3$—$C_{10}$, preferably $C_7$—$C_{10}$, ketone, mentioned hereinabove, and especially ethyl amyl ketone and diisopropyl ketone. The use of ketones free from $\alpha$-methyl groups such as ethyl amyl ketone and diisopropyl ketone is especially advantageous in component (3) and/or in reaction with at least some of the groups of (1) because these ketones apparently have little tendency to become involved in undesirable side-reactions. The compositions comprising, as component (1) thereof, the ketimine-containing polymers obtained as just described (wherein there are substantially no primary amine groups) or one of the polymers containing mers of the ketimine or aldimine monomers of U.S. Patents 3,037,969 or 3,497,485 have extended pot-life in anhydrous conditions. They also provide hydrocurable compositions which are adapted to cure when exposed to ambient conditions of temperature and relative humidity (e.g. 20—25°C and 20 to 90% R.H.).

Thus, one embodiment of the invention provides a composition which is substantially anhydrous and in which component (1) is a ketimine-containing amidation product of a vinyl addition compolymer containing units of at least one $C_1$—$C_4$ alkyl acrylate and/or methacrylate with an aliphatic amine having at least two primary amine groups, preferably ethylene diamine, substantially all of the primary amine groups in the amidation product having been converted into ketimine groups by reaction with an aliphatic or alicyclic $C_3$—$C_{10}$ ketone, preferably diisopropyl ketone or ethylamyl ketone, with removal of the water liberated by that reaction, whereby the composition is hydrocurable when applied to surfaces of a substrate for coating, adhering or sealing thereof under ambient conditions of temperature (20—25°C) and relative humidity of at least 20%.

Even with the "chemically combined" type of blocked amine, there may be included additional free ketone or aldehyde of the same constitution as that used in making the imine to serve as part of or all of the solvent. The compositions of the present invention may be applied to form clear, protective, and decorative coating and/or impregnant films. However, they may also contain various additives other than those which react to form the crosslinked binder, body, or matrix of the film. Such additives may be plasticizers, such as dioctyl phthalate, pigments and inorganic fillers, such as glass, titanium dioxide, silica, barite, and calcium carbonate, colouring matter, such as dyestuffs, anticorrosive agents, and waterproofing or water-repellents, such as paraffin waxes.

The compositions may be formulated by mixing component 1) with component 2) and suitable solvents, dispersing agents, fillers, pigments and the like and storing the composition in closed containers if necessary, at low temperature, such as from −10°C to +10°C until it is used at ambient temperatures. Mixing may also be carried out at these low temperatures. If however, it is not to be used within a period of one to three days, it is more practical to make up the composition as a two-package system, one package containing component 1) and the other component 2) with polymerization inhibitor, optionally with a monofunctional compound of formula II above. Suitable solvents may be present in either or both packages. Pigments, fillers, and the like may be included in one or the other of the packages or even part in one, and part in the other. Instead of including the monofunctional compound of formula II in the second package containing component 2), such monofunctional compound (or compounds) may be included, optionally with a vinyl polymerization inhibitor in the first package so that it may have an opportunity to react with primary or secondary amine groups while in storage and/or during shipment of the two-package system to the point of use where they are mixed just prior to use.

After mixing the two packages in proper proportions, the resulting composition may be used for coating numerous substrates, such as those of metals, wood, glass, and plastics to produce thereon upon ambient curing, with or without acceleration thereof by heating, protective and/or decorative coating films which have an outstanding combination of properties, chemical resistance, rust-resistance, durability, e.g. to weathering, i.e. exposure to UV light, rain, etc., and hardness, toughness, flexibility, and other mechanical properties, including lubricity, frictional effects, etc. Also, the factors of low cost and toxicity involved in manufacture and use taken in conjunction with the properties obtainable on cure provide a versatility obtainable from the compositions of the present invention such that in many instances they may beneficially be used in place of other ambient curing systems heretofore used. The compositions may also be used as binders for fibrous webs to form bonded nonwoven fabrics by impregnation of the webs and curing. Since the compositions of the present invention do not depend on air-curing, they are quite useful as adhesives to join sheets or panels of various materials, e.g. glass, metals, wood and plastics, such as those of polyesters (Mylar—RTM), polymethyl methacrylates (Plexiglas—RTM), cellophane, and the like.

The compositions of the invention may be used for coating, impregnating or bonding a substrate by applying a composition according to the invention to the substrate and curing the composition under ambient temperature conditions, optionally with heating to accelerate the cure.

Cured coating, impregnating or bonding film may be prepared from compositions according to the invention by mixing components (1) in a suitable vehicle, (2) and optionally (3) and/or (4) and then applying the mixture to the substrate at ambient conditions and then curing the film by exposure to ambient conditions for a period of at least two hours. To inhibit reaction, the mixing may be carried out at a temperature of from −10 to +10°C (i.e. below normal ambient temperature of 20 to 25°C). The mixture may be stored at such temperature, as mentioned above. Before mixing, component (1) may be reacted with monoethylenically unsaturated monomer of formula II above, such as acrylonitrile, an alkyl(meth)acrylate or an N-alkyl substituted (meth)acrylamide.

In the following examples which include those illustrative of the invention, the parts and percentages are by weight and the temperatures in Celsius degrees, unless otherwise specified. Also, the following abbreviations are used:

VT for vinyltoluene
MA for methyl acrylate
BMA for butyl methacrylate
EDA for ethylenediamine
$\bar{M}_n$ for number average molecular weight
$\bar{M}_w$ for weight average molecular weight
ME for milliequivalent
d.p. for degree of polymerization
t-BP for t-butyl peracetate
KHN for Knoop Hardness No. (obtained by Tukon tester)
R.H. for relative humidity
MIBK for methyl isobutyl ketone
MM for millimoles

In the examples the words "Mylar", "Plexiglas", "Cellophane", "Cellosolve", "Lupersol", "Carbitol" and "Baysilone" are registered trade marks.

## Example 1

a) Preparation of Poly(VT/BMA/MA//34.1/41.0/24.9)

To 800.7 g of butyl Cellosolve (2-butoxyethanol), heated to 140°C under a nitrogen atmosphere, and with rapid stirring is added a solution of 464.4 g of methyl acrylate, 766.8 g of butyl methacrylate, 637.2 g of vinyltoluene, and 80.07 g of 70% t-butyl peracetate over a period of 3 hours. The addition of the solution of monomers containing catalyst is made at a uniform rate of 630 g/hour.

When the addition is completed, the solution is held at a temperature of 140°C for 1 hour and then cooled to 120°C. Then, 8.0 g of 70% t-BP is added and a temperature of 120°C is maintained for 1/2 hour before cooling to room temperature.

The resulting clear, amber solution contains the copolymer of the three monomers in the percentages given in the heading at 69.4% solids and has a viscosity of 7300 cps (7.3 Pa s) as determined with a Brookfield viscometer at 25°C using a #3 spindle at 12 rpm.

Gel permeation chromatography shows:

$\bar{M}_n$=3200; $\bar{M}_w$=9300

The calculated dispersity ($\bar{M}_w/\bar{M}_n$) is 3.10 and the d.p. (degree of polymerization) is 27.7.

b) Amidation of the Copolymer obtained in Part a) with ethylenediamine

A solution is prepared from 1500 g of the solution obtained in part a), containing 258 g (3.0 moles) of polymerized methyl acrylate, and 121.6 g (2.03 moles) of ethylenediamine (EDA). Titration shows this solution to have an amine equivalence of 6.19 ME/g and the solution to contain a total of 3.850 equivalents of amine.

The solution is heated for 48 hours at 125°C under a nitrogen atmosphere with stirring until the amine equivalence is 5.07 ME/g.

After cooling to 90°C, 300 g of butyl Cellosolve is added to the solution. Distillation under reduced pressure (90—110°C/∼15 mm (2035 N/m²) removes 287 g of distillate. This procedure is repeated, 300 g of butyl Cellosolve added, and 362 g of distillate removed. Titration of the combined distillates shows a total of 3.06 equivalents of amine to be present. Ethylenediamine consumed by reaction with the polymer is 3.85—3.06 = 0.788 equivalents or 1.58 moles. Since the d.p. of the initial polymer is 27.7, of which 33.3 mole% is methyl acrylate, there are 9.24 methyl acrylate mers per average molecule initially. On the basis that reaction with ethylenediamine converts methyl acrylate units in the polymer backbone to N-2-aminoethylacrylamide units, then (1.58/3.00) (9.24) = 4.86 of the latter units are formed per average molecule as a result of the amidation.

Gas chromatography indicates that the solution contains 1% residual ethylenediamine. A solution of 560 g of the amidation product is diluted with 400 g of butyl Cellosolve and 60 g of a strong-acid type of ion exchange resin is added to remove the excess amine. The mixture is warmed on a steam bath and stirred for 5 hours. Initially, before addition of the ion exchange resin, the amine titer was 0.491 ME/g and after removing the ion exchange resin by filtration the titer was 0.234 ME/g. This corresponds to the loss of 0.78% ethylenediamine. A gas chromatograph of the treated solution shows no ethylenediamine peak present.

The solids content of the treated solution is 34.1% and the amine equivalence based upon solids is 1.44 ME/g.

Example 2

a) Preparation of Poly(VT//MA//73.3/26.7)

Using the procedure following in Example 1a) with a monomer mixture consisting of 1099 g of vinyl toluene and 401 g methyl acrylate with 21.4 g of 70% t-BP and adding this solution to 643 g of butyl Cellosolve at 140°C, a polymer with $\bar{M}_n$ 11,700, $\bar{M}_w$ 30,500, and a calculated d.p. of 109 is obtained.

b) Amidation of Copolymer of a) above

To 500 g of the copolymer solution of part a) in 200 g of butyl Cellosolve is added 99.8 g of ethylenediamine. The solution is heated for 40 hours at 136°C by a procedure similar to that used in Example 1b). After twice adding and vacuum distilling butyl Cellosolve, a resin solution containing 41.7% resin solids with an amine titer of 2.25 ME/g based upon solids, is obtained.

Example 3

Chemical Blocking with Acetone

a) Acetone Imine

To 270 g of 34.1% solution of the amine-containing polymer obtained in Ex. 1b), there is added 75 g of reagent grade acetone and 50 g of Davison[R] number 4A molecular sieves to withdraw moisture; the mixture is heated and refluxed 2 hours with stirring under a nitrogen atmosphere. After cooling, the mixture is filtered and stored in a dried bottle. Titration shows an amine equivalence of 0.387 ME/g.

b)

A 50% solution is prepared by dissolving 400 g of Actomer X-80 in 400 g of distilled butyl Cellosolve. The solution is dried by adding 40 g of Davison 4A molecular sieves and stirring at room temperature for 4 hours. The sieves are removed by filtration and the solution is stored in a dried bottle. The acrylate equivalence is 1.40 ME/g.

c) Pot-Life Comparisons

To 100 g of anhydrous acetone imine of part a) hereof there is added 35.1 g of the dried Actomer X-80 solution in butyl Cellosolve obtained in part b) hereof and the resulting solution is stored in a bottle which had been previously dried at 125°C to remove traces of moisture. This solution is designated 1A.

A 50-g portion of the 1A solution is transferred to a second bottle and 0.50 g (1.0%) water is added with rapid stirring. This solution is designated 1B.

On standing at room temperature (∼23°C) solution 1B gels in 50 minutes while solution 1A remains fluid for 2 days and gradually increases in viscosity to the point of gelation at 4 days.

d) Coatings from an Acetone Imine Blocked Resin System
Coatings are prepared as follows:

| Coating Solutions: | A | B | C |
|---|---|---|---|
| grams of acetone imine of part a) | 43.32 | 43.32 | 43.32 |
| ME amine | 16.76 | 16.76 | 16.76 |
| grams 50% Actomer X-80 solution obtained in part b) | 15.78 | — | 3.29 |
| grams, trimethylolpropane triacrylate triacrylate (TMPTA) | — | 2.08 | 1.64 |
| ME, Actomer X-80 (1.40 ME/g) | 22.09 | — | 4.61 |
| ME, TMPTA (10,63 ME/g) | — | 22.11 | 17.43 |
| ME, total acrylate | 22.09 | 22.11 | 22.04 |
| Acrylate/amine ratio | 1.32 | 1.32 | 1.32 |

After tumble mixing for 20 min. the solutions are coated on Bonderite 1000 steel panels with a 7-mil film spreader and then cured at 21.10°C (70°F)/50% RH. At the times indicated in the following TABLE 1, the properties are determined:

TABLE 1

| | Cure | Bake | Coating A | Coating B | Coating C |
|---|---|---|---|---|---|
| KHN 21.1°C (70°F) 50% RH | 3 wks | none | 8.64 | 14.2 | 12.8 |
| KHN | ,, | 60°C (140°F)/ 24 hr. | 12.9 | 18.0 | 16.2 |
| Reverse Impact m/lb | ,, | ,, | 2.7(24) | <0.23 (<2) | <0.23 (<2) |
| Mandel Bend (in) mm | ,, | ,, | <3.2 (<1/8) | >12.7 (>1/2) | >12.7 (>1/2) |
| QCT 65.5°C (150°F)/ 100 hr. | ,, | ,, | | No change in appear. | |
| Print Resist 60°C (140°F)/4 hr. | ,, | ,, | 8 | 10 | 8 |
| Xenon Arc W | ,, | ,, | >2000 hr. | partial delamination | 1500 hr. |

TABLE 1 (continued)

| | Coating | | |
|---|---|---|---|
| | A | B | C |
| Chemical Resistance (3 wks ambient curing plus 140°F/24 hr.) (15-min patch tests) | | | |
| 10% HCl | 3 | 1 | 1 |
| 10% Acetic acid | 3 | 1 | 1 |
| Acetone | 3 | 3 | 3 |
| Methanol | 3 | 2 | 2 |
| Toluene | 3 | 1 | 1 |
| Gasoline | 3 | 4 | 4 |
| 10% NaOH | 4 | 4 | 4 |

Example 4

Chemical Blocking with MIBK/Toluene Azeotrope

a) Ketimine-containing Polymer

To 283 g of an EDA aminolysis product (having 2.42 ME/g amine titer) of a copolymer of 67.3% VT and 32.7% MA having a $\overline{M}_n$ of 3000 is added 150 g of toluene and 150 g of methyl isobutyl ketone. The resulting solution is heated at reflux in a flask equipped with a stirrer, condenser, and a Dean-Stark trap to separate water formed by the reaction of amine with ketone and under a nitrogen atmosphere. After refluxing 2 hours, 14.1 g of water has collected in the trap (theory 12.3). The resin solution is then stripped under vacuum until the solids content of the resin solution is 44.0% solids. Titration in the presence of water shows the solution contains 2.10 ME/g of amine.

b) Coating

A clear coating is prepared from the ketimine-containing polymer obtained in part a) as follows

| | |
|---|---|
| Imine blocked polymer of part a) | 46.1 g |
| Actomer X-80 | 25.0 |
| Butyl Cellosolve | 2.2 |
| Xylene | 28.0 |
| Methylisobutylketone | 28.0 |

The initial solution shows a Gardner-Holdt viscosity of A-1 and after 7 hours at ambient temperature a viscosity of D+. A similar formulation using the unblocked aminolysis product starting material of part a) shows a viscosity of Y two hours after mixing and gels at 2.5 hours.

Coatings of the blocked resin system on Bonderite 1000 steel panels are glossy and after 7 days at ambient temperature show a KHN of 4, resistance to 10% acetic acid of greater than 30 minutes, and resistance to organic solvent and 10% aqueous sodium hydroxide solution.

Example 5

Prereaction of Amidated Resins with Monofunctional Acrylates and then Preparing Coatings with Polyacrylates

The EDA amidation product of Ex. 1b) is mixed in separate containers with various monofunctional acrylic monomers as follows:

A. Methyl acrylate (MA)

B. Acrylic acid ester of a mixture of ($C_{16}$—$C_{20}$) alcohols (CEA)

C. Hexafluoroisopropyl acrylate (HFIPA)

The relative proportions of the respective components of the several mixtures are such as to provide, for each amine nitrogen ME of the amidation product, from 0.25 to 1.25 ME of unsaturate in the MA, from 0.25 to about 0.50 ME in the CEA, and from 0.5 to 1.0 ME in the HFIPA. The solutions are allowed to react at room temperature for four days and the resulting solutions may be provided with 7% to 12% by weight of a ketone, e.g. acetone.

Such coatings can be applied as described in the previous examples.

Example 6

a)

A poligomer is prepared by adding a solution containing 177.5 g of the methylisobutyl ketimine of 2-aminoethyl methacrylate of U.S. Patent 3,037,969 (Ex. 2), 265.5 g of methyl methacrylate and 19.0 g of 70% t-BP to 190 g of butyl Cellosolve while maintaining the mixture at a temperature of 130°C over a period of 5 hours. When the addition is complete, an additional charge of 1.9 g of 70% t-BP is added to the solution and heating at 130°C is continued for 0.5 hours before cooling.

The resulting polymer solution has the following properties:

Viscosity Brookfield, #4 spindle at 3 RPM; 120, 800 cps (0.8 Pa s at 3 RPM; 25°C

| | |
|---|---|
| Amine titer | 0.88 ME/g |
| Solids | 68.1% |
| $\bar{M}_w$, GPC | 69,300 |
| $\bar{M}_n$, GPC | 13,500 |
| Calc'd dp | 100.4 |

A second poligomer is prepared by the method described in part a) by adding a solution containing 177.5 g of the methylisobutyl ketimine of 2-aminoethyl methacrylate, 49.5 g of methyl methacrylate, 224.6 g of styrene and 19.35 g of 70% t-BP to 194 g of butyl Cellosolve maintained at a temperature of 140°C over a period of 5 hours. An additional charge of 1.9 g of 70% t-BP is then added to the batch and heating at 140°C continued for 0.5 hours before cooling.

The resulting resin solution has the following properties.

Viscosity, Brookfield, #4 spindle 45,200 cps (452 Pa s) at 6 RPM, 25°C

| | |
|---|---|
| Amine titer | 1.17 ME/g |
| Solids | 64.7% |
| $\bar{M}_w$ (GPC) | 17,100 |
| $\bar{M}_n$ (GPC) | 5,620 |
| Calc'd dp | 43.5 |

c)

These imine poligomers are formulated with Actomer X-80 at a 1.0/1.3 amine/acrylate ratio in three solvent systems, butyl Cellosolve, 1 butyl Cellosolve/1 MIBK, and 1 butyl Cellosolve/1 xylene/1 MIBK (weight ratios).

All six samples exhibit gel times greater than 8 hours. 7-day ambient-cure samples, in all cases, are soft (KHN's between 0.5 and 3.00), flexible and display excellent impact strength. Solvent and acid resistance are poor. All are swelled but not dissolved by methylene chloride. 7-day bake (140°F; 60°C) samples of coatings made using the polymer of part a) has good hardness and good resistance to acid (30 min. 10% HAc) with acceptable solvent resistance. 7-day bake (140°F; 60°C) samples of coatings made with the poligomer of part b) do not show any better acid and solvent resistance properties than the ambient-cure samples.

Example 7

Poligomer

a)

A poligomer containing styrene and methyl acrylate at a 1:1 mole ratio is prepared at 77% solids in butyl Cellosolve at 140°C with 70% t-BP catalyst by the method described above. Properties of the resulting polymer solution are:

| | |
|---|---|
| Solids | 77.2% |
| $\bar{M}_w$ (GPC) | 8880 |
| $\bar{M}_n$ (GPC) | 3170 |
| Appearance | clear, water-white |

b) Amidation with EDA

To 1168 g of the above polymer solution there is added 100 g of butyl Cellosolve and 629 g of ethylenediamine. After heating for 33.25 hours in the temperature range of 115—130°C, vacuum stripping to remove unreacted ethylenediamine, and diluting with butyl Cellosolve, a resin solution with the following properties is obtained:

| | |
|---|---|
| Solids | 50.9% |
| Amine titer | 3.36 ME/g |
| Viscosity; Brookfield | 78,000 cps (78 Pa s) |
| Appearance | clear, light amber |
| Acid titer | 0.82 ME/g |

c) Amidation with 1,3 propylenediamine

To 982.7 g of the polymer solution obtained in part a) there is added 100 g of butyl Cellosolve and 653.8 g of 1,3-propylenediamine. This solution is heated for 23.0 hours at 125—130°C, vacuum stripped to remove unreacted diamine, and diluted with butyl Cellosolve to yield a resin solution with the following properties:

| | |
|---|---|
| Solids | 50.9% |
| Amine titer | 2.52 ME/g |
| Viscosity, Brookfield | 234,000 cps (234 Pa s) |
| Appearance | clear, pale yellow |
| Acid titer | 0.33 ME/g |

Example 8

Chemical blocking with cyclohexanone using cyclohexane as solvent

a)

To 200 g of a butyl Cellosolve solution of the EDA-amidated 1.5:1 mole ratio Styrene/MA copolymer used in Ex. 8 is added 100 g of cyclohexanone and 200 g of cyclohexane. The resulting solution is heated at reflux ina flask equipped with a Dean-Stark trap to collect water formed. When the evolution of water is completed excess cyclohexanone and cyclohexane solvent are removed by distillation under reduced pressure and then butyl Cellosolve is added to the polymer to yield a solution thereof with the properties:

| | |
|---|---|
| Viscosity | Z |
| Solids | 26.9% |
| Amine titer | 1.43 ME/g (solids) |
| Color | light amber |

b)

In a similar manner EDA-amidated starting copolymer of part a) hereof is reacted with MIBK to block the $NH_2$ groups with the MIBK ketimine using cyclohexane to azeotropically distill water formed. Physical properties are:

| | |
|---|---|
| Viscosity, GH, 25°C | Z1+ |
| Solids | 35.8% |
| Amine titer | 1.90 ME/g (solids) |
| Color | light amber |

c)

Coatings are prepared by mixing the ketimines of parts a) and b) with acrylated epoxidized soybean oil, such as Actomer X-80 at an amine/acrylate ratio of 1.0/1.3 in butyl Cellosolve/xylene (2/1).

Ambient-cured coatings on test panels are soft, with excellent flexibility and impact strength. The coatings display acceptable acid and solvent resistance. The coating is swelled but not dissolved by methylene chloride.

## Example 9

Benzaldehyde Imine Block

To a solution of 250 g of an EDA-amidated copolymer (styrene/MA//2/1 mole ratio) which had been treated with a strong acid ion exchange resin to remove residual EDA, there is added 100 g of toluene and 59.1 g of benzaldehyde. The resulting solution is heated at reflux for 1.5 hrs. using a Dean-Stark trap to collect water formed. By this time 3.5 ml of water is collected and the formation of water stops. Initially, 558 ME of resin is charged, based upon a titer of 2.23 ME/g for the starting amidated copolymer, together with 558 MM of benzaldehyde. On the basis that all of the initial amine titer is primary amine, the water formed (194 MM) calculates as 34.8% conversion to imine.

The solution is then stripped of residual benzaldehyde and toluene under reduced pressure (300 g of distillate collected), cooled, and then diluted with 50 g of xylene.

| | |
|---|---|
| Appearance | clear, reddish amber |
| Amine titer | 1.90 ME/g (solids) |
| Solids | 41.1% |

Coating compositions are formed by mixing this solution with Actomer X-80 at three amine/acrylate stoichiometries: 100, 75 and 50 percent in butyl Cellosolve.

7-day ambient-cure results indicate that these samples are slightly crosslinked. Coatings obtained are of medium hardness but display little resistance to reverse impact (~0.23J) (~2 in.-lb.). They are heavily blistered and disintegrated by acid (30 min. 10% HAc). Solvent resistance is acceptable or poor at the high and low stoichiometries, respectively. The coating is swelled but not dissolved by methylene chloride.

7-day bake 60°C (140°F) results on these coatings show that they are crosslinked sufficiently to give hard, flexible coatings with excellent impact resistance in addition to fair resistance to acid (4H pencil H pencil) and solvents.

## Example 10

a) Polymer 55 MMA/20 BMA/25 Styrene; dp 19

A 5-liter, 4-necked flask equipped with a thermometer, mechanical stirrer, nitrogen sparge, Friedrich condenser, 2000 ml pressure-equalizing addition funnel and "Thermowatch" utilized with a pot lifter and heating mantle is charged with 500 g of butyl Cellosolve. The flask is heated, under nitrogen, to 150°C and to it then is slowly added a mixture of 1100 g methyl methacrylate (11.0 moles), 400 g of butyl methacrylate (2.82 moles), 500 g of styrene (4.81 moles), 80 g of Lupersol 70 (75% t-butyl peracetate in mineral spirits; 3% on monomers), and 20 g of 2-hydroxyethyl mercaptan (1% on monomer) over a period of 9.25 hours. The resulting product is stirred 0.25 hours longer at 150°C whereupon 8.0 g of Lupersol 70 is gradually added over a period of 0.25 hours and the mixture is then held 1.0 hour longer at temperature to complete residual monomer chase. Product specification: $\bar{M}_w$=4340; $\bar{M}_n$2040; $\bar{M}_w/\bar{M}_n$=2.13; 80% solids in butyl Cellosolve.

b) Amidated Resin

A 2-liter, 4-necked flask equipped with a thermometer, mechanical stirrer, nitrogen sparge, variable take-off distillation head, and "Thermowatch" utilized with a pot lifter and heating mantle is charged with 484.4 g of the oligomer obtained in part A (0.19 mole, 80% solids in butyl Cellosolve), 79.8 g of diethylenetriamine (0.77 mole), and 103.4 g of xylene. The mixture is heated at 145°C, under nitrogen, for 14.5 hours at which point the residual amine titer is 62.4% of initial charge. Temperature is maintained by the continuous removal of solvent and by-products (methanol, butanol) during the course of the reaction. To the flask is then added sufficient deionized water to remove residual xylene

by azeotropic distillation and reduce product solids to ∼60%. The resulting acrylic polyamine has an amido functionality of ∼4.1 and is recovered as a clear, light amber solution with the following specifications:

| | |
|---|---|
| Solids: 61.9% in butyl Cellosolve/water | (36:64) |
| Viscosity, spindle 4, 0.6 RPM; 25°C | 518,000 cps (518 Pa s) |
| Amine Equivalent Weight | 483 |
| Acid Number | 34.2 |
| Total Titer | 2.68 meq/g |

Example 11

a)

Oligomeric methyl acrylate with $M_w$ of 1500 and $M_n$ of 800 is prepared as follows: A slurry of 53.8 g of potassium tertiary butoxide in 400 g of toluene is stirred in a nitrogen atmosphere in a 3 liter, 3-necked flask equipped with stirrer, thermometer, condenser, and dropping funnel. A total of 2066 g of methyl acrylate (MA) is added over two hours while external cooling is used to maintain a 70°C reaction temperature. After an additional 4 hours at 70°C, 25.6 g of concentrated sulfuric acid is added. Toluene and unreacted methyl acrylate are then removed at reduced pressure. Conversion of methyl acrylate to the oligomer characterised with $M_n$ 800 is 87%.

b)

Then, 516 of this methyl acrylate oligomer and 468.8 g of ethylenediamine are heated in a stirred flask equipped for distillation. An initial amine titer of 16 meq/g (in acetone/water, 1/1), is observed. The mixture is then heated until methanol refluxes vigorously; distillation of methanol is then allowed at a reaction temperature of 110°C. After 12 hours, 126 g of methanol is collected. The pressure is reduced and ethylenediamine is distilled, finally as a codistillate with water. A total of 107 g of ethylenediamine is recovered. The reaction mixture is diluted with water to 73.2% solids and this solution has a titer of 7.31 meq/g.

Example 12

a) Alpha-Olefin/EA/BA Co-Poligomer

To a 2-liter stirred Parr autoclave there is added 560 grams of propylene trimer; the reactor is sealed and sparged with nitrogen and heated to 190°C where the pressure becomes 40 psig (2758 kN/m²). The gradual addition of a mixture of 120 g of ethyl acrylate, 120 g of n-butyl acrylate and 1.2 g of cumene hydroperoxide is started at constant rate. The addition is completed over a period of 4 hours at the end of which time the temperature is 220°C and the pressure 115 psig (792.9 kN/m²). The reactor is heated an additional 1.0 hr. at 190 ± 5°C and then coled. The reaction product is stripped of unreacted monomers at a pot temperature of 50—100°C/5—20 mm HG (678—1357 N/m²) of low molecular weight volatiles at a pot temperature of 210°/0.1—5 mm Hg (68—768 N/m²). The undistilled residual product, 200 grams yield, is used without further purification.

b) Amidation

To 525.0 g of the copoligomer product obtained in part a) there is added 525.0 g of butyl Cellosolve and 252.4 g of ethylenediamine. The solution is heated at 115°C for 33 hours, and then stripped under reduced pressure (∼10 mm Hg (1357 N/m²) to remove 330 g of solvent. An additional quantity of 500 g of butyl Cellosolve is added, and the resulting solution is again stripped under reduced pressure until a solution containing 85.9% solids is obtained. The amber solution obtained has an amine titer of 3.57 ME/g based upon solids, and contains about 0.33 residual ethylenediamine by gas chromatography.

Example 13

a) Preparation of Poly(Styrene/MA//82.9/17.1)

To 1076 g of 2-butoxyethanol, heated to 136°C under a nitrogen atmosphere, with rapid stirring, is added a solution of 2080 g of styrene, 430 g of methyl acrylate, and 107 g of t-BP (75% solution in mineral spirits) over a period of 3 hours.

When the addition is complete, the solution is held at a temperature of 136°C for 1 hour, then additional 10.8 g of 75% t-BP is added, and heating at 136°C continued for 1 hour before cooling.

The resulting solution is clear and contains 69.9% solids (2 hours/125°C). Gel permeation chromatography (GPC) shows $\bar{M}_n$ 4,600; $\bar{M}_w$ 13,900. When diluted to 50% solids with 2-butoxyethanol the viscosity is 1,640 cps, (1.6 Pa.s).

b) Amidation with EDA

To 2200 g of the solution obtained in part a) there is added 880 g of 2-butoxyethanol and 430.5 g of ethylene diamine. The resulting solution is heated at 136°C for 120 hours and then cooled to 90°C and vacuum distilled as described in Example 1b) to remove residual ethylene diamine to produce a clear, light amber colored solution at 48.5% solids having an amine titer of 1.46 ME/g, and a viscosity of 9620 cps (9,62 Pa.s).

c) Conversion of the Amidated Copolymer in Part b) to a Polyimine by Reaction with Ethyl Amyl Ketone

To 2960 g of the amidated copolymer prepared in part b) there is added 538 g of ethyl amyl ketone (5-methyl-3-heptanone) and 600 g of cyclohexane. The solution is heated at reflux (94°C) for 4.5 hours, during which time 19 ml of water is azeotropically distilled and collected by means of a Dean-Stark trap between the flask and condenser. Practically all of the primary amine groups are converted to imine groups.

The solution is then distilled under vacuum (100°C/(10 mm 1357 N/m$^3$) to remove cyclohexane and unreacted ketone. Then, 134.5 g of ethyl amyl ketone is added to the solution, which contains 48.5% solids, has an amine titer of 1.46 ME/g, and a viscosity of 5850 cps (5.85 Pa s).

d) Coating Prepared from the Polyimine (Part C) and a Polyacrylate

1. To 100.0 g of Actomer X-80$^R$ there is added 100.0 g of xylene, 200.0 g of titanium dioxide pigment and 200.0 g of sand. After grinding for 0.5 hours, the sand is removed by filtration.

2) An enamel is prepared by the formulation:

| Component | Parts |
|---|---|
| Sand mill grind | 100.0 |
| Polyimine (Part c) | 137.1 |
| Actomer X-80$^R$ | 25.5 |
| Xylene | 129.5 |
| Ethyl Amyl Ketone | 24.2 |
| Baysilone (flow and leveling agent) | 0.16 |
| 2-butoxyethanol | 0.4 |
| Enamel solids | 40% by weight |
| Pigment/Binder Ratio | 30/70 |
| Viscosity (#4 Ford cup) | ~18 sec |
| Usable Pot Life | ca. 5 hours |
| Set Time | ca. 30 minutes |
| Tack-free Time | ca. 90 minutes |

e) Properties of Spray-Applied Coating at 1.5 mils on Bonderite$^R$ 1000 After 7 Days Air-Dry at Ambient Temperature and Relative Humidity (45%)

| | |
|---|---|
| Knoop Hardness | 7 |
| Flexibility 3.2 mm (1/8") Mandrel | pass |
| Reverse Impact | 2.3 J (20 in.-lb) |
| Print Resistance 13.8 KNm -2/1hr/60°C (2 Psi/1 hr/140°F (60°C) lt.-med. | |

*Chemical Resistance* (1/2 hr Patch Tests)

| | |
|---|---|
| Acetic Acid (10% in $H_2O$) | 2H—B* |
| NaOH (10% in $H_2O$) | 2H—2H |
| Gasoline | 2H—H* |
| Xylene | 2H—6B* |
| Ethanol | 2H—6B* |

*Hardness recovers after evaporation of solvent.
*Weather-O-Meter* (1500 hours)
%Gloss Retention 60°/20° 96/90+

Example 14

a) Preparation of Poly(styrene/MA//78.4/21.6)

The procedure described in part a) of previous example 20 is repeated using 1076 g of 2-butoxyethanol, 1968 g of styrene, 542 g of methyl acrylate, an initial charge of 179.3 g of 75% t-BP, and a final charge of 17.9 g thereof. The polymerization temperature is 145°C and the monomer feed time 3.0 hours. The resulting solution is clear, contains 71.1% solids, has a viscosity of 85,400 cps (85.4 Pa s) and $\bar{M}_w$ and $\bar{M}_n$, determined by GPC are 6,290 and 2,500, respectively.

b) Amidation

A solution of 1700 g of the copolymer solution prepared in part a), 680 g of 2-butoxyethanol and 340.7 g of ethylene diamine is heated for 25 hours at 154°C, and then vacuum distilled as previously described to remove excess ethylene diamine.

The final solution contains 55.2% solids, has an amine titer of 1.29 ME/g, and a viscosity of 13,600 cps (13.6 Pa s).

c) Converstion of the Amidated Copolymer to a Polyimine

To 2260 g of the amidated resin prepared in part b) there is added 418.3 g of ethyl amyl ketone (EAK) and 226.0 g of cyclohexane. The solution is heated at reflux for 10.3 hours during which time 13.7 g of water is collected by means of a Dean-Stark trap. The final solution, after vacuum distillation of cyclohexane and excess ethyl amyl ketone and readdition of 104.5 g of the latter, is clear, red-amber in color, contains 56.7% solids, has a viscosity of 13,520 cps (13.52 Pa s) and an amine titer of 1.28 ME/g. Essentially all of the primary amine groups of the EDA-amination product of part b) are converted to EAK-imine groups.

d) Clear Coating of the Polyimine with a Polyacrylate

A solution is prepared by mixing 102 g of the polyimine prepared in part c) with 84 g of a 50% by weight solution of Actomer X-80 dissolved in xylene. This solution is coated on Bonderite 1000 and after 7 days drying under ambient conditions of temperature and humidity (25°C and 40—60% R.H.) yields a clear film with a Knoop Hardness of 4.6, a pencil hardness of 2H, and a reverse impact of 15.8 J (140 in.-lb). The coating is resistant to common solvents.

Example 15

a) Preparation of Poly(Styrene/Butyl Acrylate//70.9/29.1)

The procedure described in part a) of example 14 is repeated using 1076 g of 2-butoxyethanol, 1780 g of styrene, 730 g of butyl acrylate (BA), an initial charge of 179.2 g of t-BP (75% in mineral spirits) and a final charge of 17.9 g thereof a monomer feed time of 4.5 hours and a polymerization temperature of 150°C.

The resulting solution is clear, contained 72.9% solids, had a viscosity of 14,000 cps (14 Pa s) and $\bar{M}_w$ and $\bar{M}_n$ of 5980 and 2420, respectively.

b) Amidation

A solution of 1677 g of the copolymer solution prepared in part a), 671 g of 2-butoxyethanol and 304 g of ethylene diamine, is heated for 24 hours at 155°C and then for 48 hours at 170°C. Excess diamine is then removed by vacuum distillation as previously described. The final solution contains 58.5% solids, has an amine titer of 0.51 ME/g, is reddish brown in color, and has a viscosity of 1550 cps (1.55 Pa s).

c) Conversion of the Amidated Copolymer to a Polyimine

To 2026 g of the amidated copolymer prepared in part b) there is added 203 g of cyclohexane

and 155.6 g of ethyl amyl ketone. The solution is heated at reflux for 16 hrs., during which time 1.2 ml of water is collected by means of a Dean-Stark trap. The final solution, after vacuum distillation of cyclohexane and excess ethyl amyl ketone and readdition of 8.6 g of the latter, is clear, reddish brown in color, contains 0.51 ME/g amine, and has a viscosity of 1550 cps (1.55 Pa s).

d) Coating Prepared From the Polyimine of Part c) with a Polyacrylate

A coating composition is prepared as described in example 14d) substituting the polyimine obtained in part c) hereof for that used in Example 14d) and applied to cold-rolled panels at ambient conditions of temperature (25°C) and relative humidity (20% to 50% R.H.). The resulting 3-mil thick coatings air-dried to produce a clear film having properties similar to those obtained in example 14d).

Example 16

Polyacrylated Styrene/Glycidyl Methacrylate Copolymer

a) Styrene/Glycidyl Methacrylate Copolymer

To 1800 g of refluxing xylene, sparged with nitrogen there is added dropwise over a period of 3 hours, a solution of 1418 g of styrene, 382 g of glycidyl methacrylate, and 51.4 g of t-BP (75% in mineral spirits). Then, an additional charge of 5.1 g of 75% t-BP is added, and heating at reflux is continued for 1 hour before cooling to room temperature. A sparkling clear and colorless polymer solution containing 50.1% solids, having a viscosity of 102 cps (0.102 Pa s), and an $\bar{M}_w$ and $\bar{M}_n$ determined by GPC of $1.29 \times 10^4$ and $3.75 \times 10^2$, respectively, is obtained.

b) Addition of Acrylic Acid to the Styrene/Glycidyl Methacrylate Copolymer

To 3600 g of the polymer solution prepared in part a) there is added 302 g of acrylic acid. Air is slowly bubbled through the solution while it is heated on a steam bath to maintain a pot temperature of 90°C for a period of 27.5 hrs. The initial solution titer of 1.075 ME/g after 27.5 hrs. is reduced to 0.446 ME/g. Thus, 0.629 ME/g of acrylic acid is consumed by reaction with glycidyl epoxide groups in the copolymer. The solution is distilled under vacuum (20—30 mm (2.713—4.07 kN/m²)) to remove residual acrylic acid by codistillation with xylene. A total of 3200 g of xylene is added and distilled. The total distillate weighing 3644 g contains 98.5 g of acrylic acid by titration. The residual polymer solution weighs 3250 g and contains 15.0 g of free acrylic acid. The total acrylic acid consumed is 188.5 g. The calculated equivalents of acryloxy

$$(CH_2{=}CH{-}\overset{\overset{\displaystyle O}{\|}}{C}{-}O{-})$$

pendant and/or terminal groups in the polyacrylate copolymer solution is therefore 0.806 ME/g.

Example 17

a) Copolymer of Styrene and the Diisopropyl Ketone Imine of 2-Aminoethyl Methacrylate (U.S. Patent 3,037,969)

A stream of dry nitrogen is bubbled through 135 g of xylene as it is heated with stirring to reflux. To the hot solvent is added over a period of 3.75 hours a mixture of 78.0 g (0.25 mol) of styrene and 54.8 g (0.25 mol) of 2-diisopropyl ketiminoethyl methacrylate containing 3.5 g of 75% t-BP. The slow nitrogen flow through the mixture is continued at the mixture is refluxed another half hour, treated with an additional 0.4 g of 75% t-BP in 0.4 g xylene, and refluxed another half hour. The resulting hazy poligomer solution has 49.3% solids (2 hr. at 125°C) and contains 0.906 meq N/g (1.81 meq NH/g) by titration with 0.1N $HClO_4$ in HOAc.

b) Coatings

1) To 5.0 g (9.05 meq NH) of the poligomer solution obtained in part a) is added 4.9 g (9.05 meq C=C) of a 50% solution of a diacrylate ester of a liquid Bisphenol A epoxy resin in butyl carbitol.

2) To 10.0 g (18.1 meq NH) of the poligomer solution obtained in part a) is added 3.9 g (18.1 meq C=C) of a diacrylate ester of ethoxylated Bisphenol A epoxy resin.

3) To 2.0 g (3.62 meq NH) of the poligomer solution of part a) is added 8.7 g (3.61 meq C=C) of a solution of acrylated glycidyl methacrylate/styrene copolymer obtained in example 16b).

All of the above air-cure (at ambient conditions of temperature and humidity, e.g. 25°C and 50—70% R.H.) to clear, hard, tough crosslinked films which are not affected by half hour exposure to 10% acetic acid or 10% sodium hydroxide.

Example 18

a)

The primary amine groups in the amidation products obtained in examples 1b), 2b), 7b), 7c), 10b), 11b), 12b), 13b), 14b) and 15b) are converted to diisopropyl ketimine groups by adding an excess of diisopropyl ketone to each of the amidation products, based on their respective amine titer, along with

cyclohexane as a solvent, generally using the procedure described in example 13c).

b)

Coating compositions are prepared by mixing (I) each of the imine products obtained in part a) hereof with (2) the acrylic acid adduct of an epoxidized linseed oil containing an average of about 2.2 vic-epoxy groups per molecule, substantially all of such groups being reacted with acrylic acid to form a polyacryloxy compound having an average of at least two unsaturated acryloxy groups therein, in (3) 2-butoxyethanol or other solvent.

c)

The coating compositions are stored in anhydrous condition until they are applied on the surfaces to be coated. They are formed into films of about 3-mil thickness at ambient conditions of 20 to 25°C, and about 50 to 90% R.H. The cured films are comparable in properties to those obtained from the corresponding primary amine containing amidation products.

**Claims**

1. A composition, suitable for coating, impregnating and/or bonding purposes, characterised in that it comprises:

(1) at least one vinyl addition polymer containing a plurality of aldimine or ketimine groups pendant and/or terminal from units in the polymer chain;

(2) at least one material containing at least two acryloxy or methacryloxy groups of the formula:

$$H_2C{=}C(R)C(O){-}O{-} \quad (I)$$

where R is H or $CH_3$;

(3) optionally, at least one volatile ketone or aldehyde stabilizer containing from 3 to 10 carbon atoms; and

(4) optionally, at least one compound of the formula:

$$H_2C{=}C(R)X \quad (II)$$

wherein R is H or $CH_3$ and X is an electron withdrawing group.

2. A composition as claimed in Claim 1, characterised in that polymer (1) contains units of monomer having at least one of the following formulae:

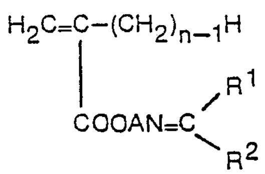

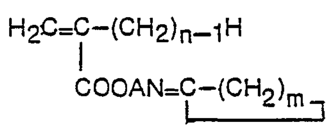

and

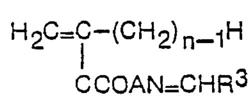

where

m is an integer having a value of 4 to 5,

n is 1 or 2,

A is a $C_2$—$C_{12}$ alkylene group,

$R^1$ is a $(C_1$—$C_{12})$alkyl or a cycloalkyl group,

$R^2$ is a $(C_1$—$C_{12})$alkyl or a cycloalkyl group, and

$R^3$ is phenyl, halophenyl or alkoxyphenyl in which the alkoxy group has one to four carbon atoms, and

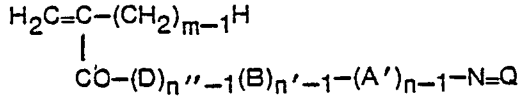

wherein:

Q is selected from the group consisting of.

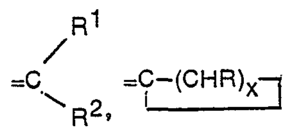 , and $=CHR_3$

R is H or it may be methyl in one CHR unit,
$R^1$ is ($C_1$—$C_{12}$) alkyl or a cyclohexyl group,
$R^2$ is ($C_1$—$C_{12}$) alkyl or a cyclohexyl group,
$R^3$ is phenyl, halophenyl, ($C_1$—$C_{12}$)alkyl, cyclohexyl or ($C_1$—$C_4$)alkoxyphenyl,
A', B, and D are the same or different oxyalkylene groups having the formula

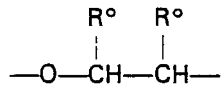

R° are the same or different and are H or alkyl radical having 1 to 2 carbon atoms,
m is 1 or 2,
x is an integer having a value of 4 to 5,
n is an integer having a value of 1 to 200,
n' is an integer having a value of 1 to 200, and
n'' is an integer having a value of 1 to 200, the sum of n-1, n'-1, and n''-1 having a value of 2 to 200.

3. A composition as claimed in Claim 1, characterised in that polymer (1) is prepared by reacting polymer containing a plurality of primary or secondary amine groups with volatile ketone or aldehyde containing from 3 to 10 carbon atoms.

4. A composition as claimed in Claim 3, characterised in that the polymer containing amine groups is prepared by the aminolysis of polymer containing units of at least one $C_1$—$C_4$ alkyl acrylate and/or methacrylate with at least one polyamine containing at least two amino groups selected from primary and secondary amino groups and having their nitrogen atoms attached to aliphatic carbon atoms.

5. A composition as claimed in Claim 3 or 4, characterised in that the amine polymer contains units of the formula:

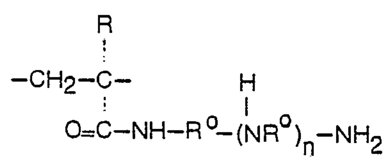

wherein R is a $C_2$ or $C_3$ alkylene group and n is 0, 1, 2 or 3.

6. A composition as claimed in any of Claims 1 to 5, characterised in that polymer (1) has a number average molecular weight of from 600 to 5000.

7. A composition as claimed in any of Claims 1 to 6, characterised in that component (2) comprises at least one of: ethylene glycol diacrylate, diethylene glycol diacrylate, propylene glycol diacrylate, trimethylene glycol diacrylate, neopentyl glycol diacrylate, 1,3-butylene glycol diacrylate, 1,4-butylene glycol diacrylate, 1,6-hexamethylene glycol diacrylate, 1,10-decamethylene glycol diacrylate, trimethylolpropane triacrylate, pentaerythritol tetraacrylate, and pentaerythritol triacrylate.

8. A composition as claimed in any of Claims 1 to 6, characterised in that component (2) comprises at least one of:

(a) a simple ester obtained by the reaction of a polyol having at least two hydroxyl groups with acrylic acid or methacrylic acid, preferably trimethylolpropane, triacrylate or a poly(200)ethylene glycol dimethacrylate;

(b) a urethane acrylate and/or methacrylate obtained by reacting at least two isocyanate groups of a polyisocyanate with a hydroxyalkyl acrylate and/or methacrylate;

(c) a polyester having at least two acrylate and/or methacrylate groups obtained by esterifying hydroxy groups with acrylic and/or methacrylic acid;

(d) a polyfunctional acrylate and/or methacrylate obtained by reaction of a hydroxyalkyl acrylate and/or methacrylate with (i) a dicarboxylic acid having 4 to 15 carbon atoms, (ii) a polyepoxide having terminal glycidyl groups, or (iii) a polyisocyanate having terminal reactive isocyanate groups;

(e) an acrylate and/or methacrylate terminated polyester made from acrylic acid and/or methacrylic acid, a polyol having at least three hydroxyl groups, and a dicarboxylic acid;

(f) a polyfunctional acrylate and/or methacrylate obtained by the reaction of acrylic and/or methacrylic acid with at least 2 epoxy groups of an epoxidized drying oil, or epoxidized drying oil fatty acid ester, or amide thereof, or a corresponding alcohol, containing at least two epoxy groups;

(g) a urethane derivative or amine derivative of a polyfunctional acrylate and/or methacrylate of (f) above obtained by the reaction of an isocyanate or amine respectively with the polyfunctional acrylate and/or methacrylate while retaining at least two acrylate and/or methacrylate groups therein;

(h) an acrylic acid adduct to an epoxidized vegetable or animal oil having ten or more carbon atoms in the fatty acid component and sufficient unsaturation to provide at least two epoxy groups in the epoxidized oil, preferably wherein the oil is soybean oil or linseed oil;

(i) a polyacrylate and/or methacrylate obtained by the reaction of acrylic and/or methacrylic acid by addition to the epoxy groups of an aromatic bisphenol-based epoxy resin; preferably a diacrylate ester of a liquid bisphenol A epoxy resin;

(j) a polyacrylate and/or methacrylate obtained by the additon of (meth)acrylic acid to a liquid vinyl polymer having pendant glycidyl groups resulting from addition polymerization of a monomer mixture comprising glycidyl acrylate and/or methacrylate, glycidyl vinyl ether or glycidyl vinyl sulfide;

(k) a polyfunctional acrylate and/or methacrylate derived from (meth)acrylic acid anhydride and a polyepoxide;

(l) a polyfunctional acrylate and/or methacrylate urethane ester obtained from the combining of a hydroxyalkyl acrylate and/or methacrylate, a diisocyanate, and a hydroxy functional alkyd condensate;

(m) an acrylate and/or methacrylate terminated polyester obtained by the reaction of a polycaprolactone diol or triol with a diisocyanate, and a hydroxyalkyl acrylate and/or methacrylate and a urethane polyacrylate and/or methacrylate obtained by the reaction of a hydroxyl-containing ester of a polyol with acrylic and/or methacrylic acid and a polyisocyanate.

9. A composition as claimed in any preceding claim, characterised in that the relative amount of component (2) to (1) based respectively on acryloxy and methacryloxy unsaturation equivalency of (2) and potential primary and secondary amine nitrogen equivalency of (1) is such as to provide from 0.5 to 3.5 equivalents of (2) for each equivalent of (1).

10. A composition as claimed in any of claims 1 to 9, characterised in that component (3) is ethyl amyl ketone or diisopropyl ketone.

11. A composition as claimed in any of claims 1 to 10, characterised in that component (4) comprises at least one compound of the formula:

$$CH_2{=}C(R)X$$

wherein R is H or $CH_3$ and X is CN, $CONR^2R^3$ or $COOR^4$, where $R^2$ is H or $C_1$—$C_{20}$ alkyl, $R^3$ is H or $C_1$—$C_{20}$ alkyl and $R^4$ is $C_1$—$C_{20}$ alkyl which may be substituted with halogen atoms.

12. A composition as claimed in Claim 2, characterised in that component (1) is a copolymer of diisopropylketiminoethyl methacrylate.

13. A composition as claimed in Claim 12, characterised in that component (2) is a diacrylate ester of a liquid epoxy resin.

14. A composition as claimed in Claim 12, characterised in that component (2) is an acrylated glycidyl methacrylate/styrene copolymer having at least two unsaturated acryloxy groups.

15. A composition as claimed in Claim 1, characterised in that it is substantially anhydrous and component (1) is a ketimine-containing amidation product of a vinyl addition copolymer containing units of at least one $C_1$—$C_4$ alkyl acrylate and/or methacrylate with an aliphatic polyamine having at least two primary amine groups, substantially all of the primary amine groups in the amidation product having been converted into ketimine groups by reaction with an aliphatic or alicyclic $C_3$ to $C_{10}$ ketone with removal of the water liberated by that reaction, whereby the composition is hydrocurable when applied to surfaces of a substrate for coating, adhering or sealing thereof under ambient conditions of temperature (20—25°C) and relative humidity of at least 20%.

16. A composition as claimed in Claim 15, characterised in that the polyamine is ethylenediamine and the ketone is diisopropyl ketone.

17. A composition as claimed in Claim 15, characterised in that the polyamine is ethylenediamine and the ketone is ethylamyl ketone.

18. A composition as claimed in any preceding claim, characterised in that said composition is in the form of a two package system, one package containing component (1), the other package containing component (2) and polymerisation inhibitor.

19. A composition as claimed in Claim 18, characterised in that it comprises component (4) in one or both packages, the package containing component (1) optionally further comprising polymerisation inhibitor when that package contains a compound of component (4).

**Revendications**

1. Une composition convenant pour le revêtement, l'imprégnation et/ou le collage, caractérisée en ce qu'elle comprend:

(1) au moins un polymère d'addition vinylique contenant plusieurs groupes aldimines ou cétimines latéraux et/ou terminaux de motifs dans la chaîne polymère;

(2) au moins une matière contenant au moins deux groupes acryloxy ou méthacryloxy de formule:

$$H_2C{=}C(R)C(O){-}O{-}$$

dans laquelle R est H ou $CH_3$;

(3) éventuellement, au moins une cétone ou un aldéhyde volatil de stabilisation contenant 3 à 10 atomes de carbone; et

(4) éventuellement, au moins un composé de formule:

$$H_2C{=}C(R)X$$

dans laquelle R est H ou $CH_3$ et X est un groupe attracteur d'électrons.

2. Une composition selon la revendication 1, caractérisée en ce que le polymère (1) contient des motifs de monomères ayant au moins une des formules suivantes:

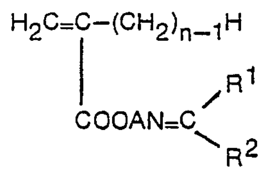

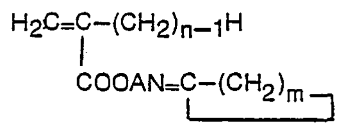

et

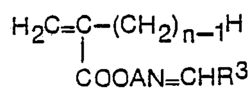

dans lesquelles:

—m est un entier ayant une valeur de 4 ou 5;

—n est 1 ou 2;

—A est un groupe alcoylène en $C_2$—$C_{12}$;

—$R^1$ est un groupe alcoyle ($C_1$—$C_{12}$) ou cycloalcoyle;

—$R^2$ est un groupe alcoyle ($C_1$—$C_{12}$) ou cycloalcoyle; et

—$R^3$ est un groupe phényle, halogénophényle ou alcoxyphényle dans lequel le groupe alcoxy a 1 à 4 atomes de carbone, et

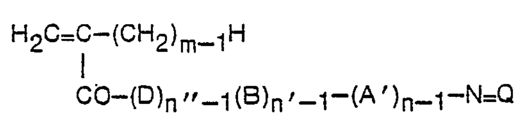

dans laquelle :

– Q est choisi dans le groupe constitué par:

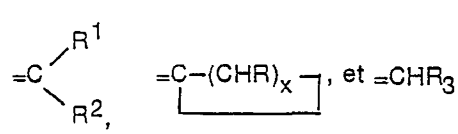

—R est H ou peut être un méthyle dans un motif CHR;

—$R^1$ est un groupe alcoyle ($C_1$—$C_{12}$) ou cyclohexyle;

—$R^2$ est un groupe alcoyle ($C_1$—$C_{12}$) ou cyclohexyle;

—$R^3$ est un phényle, un halogénophényle, un alcoyle ($C_1$—$C_{12}$), un cyclohexyle ou un alcoxy ($C_1$—$C_4$) phényle;

—A', B et D sont des groupes oxyalcoylènes semblables ou différents ayant pour formule:

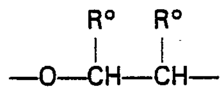

—R° sont semblables ou différents et sont H ou un radical alcoyle ayant 1 ou 2 atomes de carbone;

—m est 1 ou 2;

—x est un entier ayant une valeur de 4 ou 5;

—n est un entier ayant une valeur de 1 à 200;

—n' est un entier ayant une valeur de 1 à 200; et

—n'' est un entier ayant une valeur de 1 à 200, la somme de n-1, n'-1 et n''-1 ayant une valeur de 2 à 200.

3. Une composition selon la revendication 1, caractérisée en ce que le polymère (1) est préparé par réaction d'un polymère contenant plusieurs groupes amines primaires ou secondaires avec une cétone ou un aldéhyde volatil contenant de 3 à 10 atomes de carbone.

4. Une composition selon la revendication 3, caractérisée en ce que le polymère contenant des groupes amine est préparé par aminolyse d'un polymère contenant des motifs d'au moins un acrylate et/ou méthacrylate d'alcoyle en $C_1$—$C_4$ avec au moins une polyamine contenant au moins deux groupes amino choisis parmi les groupes amino primaires et secondaires et dont les atomes d'azote sont fixés à des atomes de carbone aliphatiques.

5. Une composition selon la revendication 3 ou 4, caractérisée en ce que le polymère aminé contient des motifs de formule:

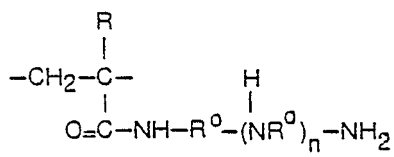

dans laquelle R est un groupe alcoylène en $C_2$ ou $C_3$ et n est 0, 1, 2 ou 3.

6. Une composition selon l'une quelconque des revendications 1 à 5, caractérisée en ce que le polymère (1) a une moyenne numérique du poids moléculaire de 600 à 5,000.

7. Une composition selon l'une quelconque des revendications 1 à 6, caractérisée en ce que le composant (2) comprend au moins un de: le diacrylate d'éthylèneglycol, le diacrylate de diéthylèneglycol, le diacrylate de propylèneglycol, le diacrylate de triméthylèneglycol, le diacrylate de néopentylglycol, le diacrylate de 1,3-butylèneglycol, le diacrylate de 1,4-butylèneglycol, le diacrylate de 1,6-hexaméthylèneglycol, le diacrylate de 1,10-décaméthylèneglycol, le triacrylate de triméthylolpropane, le tétraacrylate de pentaérythritol et le triacrylate de pentaérythritol.

8. Une composition selon l'une quelconque des revendications 1 à 6, caractérisée en ce que le composant (2) comprend un moins un de:

(a) un ester simple obtenu par réaction d'un polyol ayant au moins deux groupes hydroxy avec l'acide acrylique ou l'acide méthacrylique, de préference le triacrylate de triméthylolpropane ou un poly(200)diméthacrylate d'éthylèneglycol;

(b) un uréthane-acrylate et/ou -méthacrylate obtenus par réaction d'au moins deux groupes isocyanates d'un polyisocyanate avec un acrylate et/ou méthacrylate d'hydroxyalcoyle;

(c) un polyester ayant au moins deux groupes acrylates et/ou méthacrylates obtenus par estérification des groupes hydroxy avec l'acide acrylique et/ou l'acide méthyacrylique;

(d) un acrylate et/ou méthacrylate polyfonctionnels obtenus par réaction d'un acrylate et/ou méthacrylate d'hydroxyalcoyle avec (i) un acide dicarboxylique ayant 4 à 15 atomes de carbone, (ii) un polyépoxyde ayant des groupes glycidyle terminaux ou (iii) un polyisocyanate ayant des groupes isocyanate réactifs terminaux;

(e) un polyester à terminaison acrylate et/ou méthacrylate préparé à partir d'acide acrylique et/ou d'acide méthacrylique, d'un polyol ayant au moins trois groupes hydroxy et d'un acide dicarboxylique;

(f) un acrylate et/ou méthacrylate polyfonctionnels obtenus par réaction d'acide acrylique et/ou méthacrylique avec au moins deux groupes époxy d'une huile siccative époxydée ou d'un ester d'acide gras d'huile siccative époxydée, ou d'un amide correspondant, ou d'un alcool correspondant, contenant au moins deux groupes époxy;

(g) un dérivé d'uréthane ou un dérive d'amine d'acrylate et/ou méthacrylate polyfonctionnels de (f) ci-dessus obtenus respectivement par réaction d'un isocyanate ou d'une amine avec l'acrylate et/ou le méthacrylate polyfonctionnels en y conservant au moins deux groupes acrylate et/ou méthacrylate;

(h) un produit d'addition de l'acide acrylique d'un huile végétale ou animale époxydée ayant 10 atomes de carbone ou plus dans le composant acide gras et suffisamment d'insaturation pour fournir au moins deux groupes époxy dans l'huile époxydée, de préférence où l'huile est l'huile de soja ou l'huile de lin;

(i) un polyacrylate et/ou -méthacrylate obtenus par réaction d'acide acrylique et/ou méthacrylique par addition aux groupes époxy d'une résine époxy à base de bisphénol aromatique, de préférence un ester de type diacrylate d'une résine époxy de bisphénol A liquide;

(j) un polyacrylate et/ou -méthacrylate obtenus par addition d'acide (méth)acrylique à un polymère vinylique liquide ayant des groupes glycidyles latéraux résultant de la polymérisation par addition d'un mélange de monomères comprenant de l'acrylate et/ou du méthacrylate de glycidyle, l'éther glycidylvinylique ou le sulfure de glycidyle et de vinyle;

(k) un acrylate et/ou méthacrylate polyfonctionnels dérivés d'anhydride d'acide (méth)acrylique et d'un polyépoxyde;

(l) un acrylate et/ou méthacrylate-uréthane-ester polyfonctionnels obtenus par combinaison d'un acrylate et/ou méthacrylate d'hydroxyalcoyle, d'un diisocyanate et d'un condensat de type alkyde à fonctionnalité hydroxy;

(m) un polyester à terminaison acrylate et/ou méthacrylate obtenus par réaction d'un polycaprolactone-diol ou -triol avec un diisocyanate, et un acrylate et/ou méthacrylate d'hydroxyalcoyle et un uréthanepolyacrylate et/ou méthacrylate obtenus par réaction d'un ester hydroxylé d'un polyol avec l'acide acrylique et/ou méthacrylique et un polyisocyanate.

9. Une composition selon l'une quelconque des revendications précédentes, caractérisée en ce que la quantité relative des composants (2) à (1) par rapport respectivement à l'équivalence en insaturation acryloxy et méthacryloxy de (2) et l'équivalence potentielle en azote d'amine primaire et secondaire de (1) est telle qu'on obtienne de 0,5 à 3,5 équivalents de (2) pour chaque équivalent de (1).

10. Une composition selon l'une quelconque des revendications 1 à 9, caractérisée en ce que le composant (3) est l'éthylamylcétone ou la diisopropylcétone.

11. Une composition selon l'une quelconque des revendications 1 à 10, caractérisée en ce que le composant (4) comprend au moins un composé de formule:

$$CH_2{=}C(R)X$$

dans laquelle R est H ou $CH_3$ et X est CN, $CONR^2R^3$ ou $COOR^4$, ou $R^2$ est H ou un alcoyle en $C_1$—$C_{20}$, $R^3$ est H ou un alcoyle en $C_1$—$C_{20}$ et $R^4$ est un alcoyle en $C_1$—$C_{20}$ pouvant être substitué par des atomes d'halogène.

12. Une composition selon la revendication 2, caractérisée en ce que le composant (1) est un copolymère de méthacrylate de diisopropylcétiminoéthyle.

13. Une composition selon la revendication 12, caractérisée en ce que le composant (2) est un ester de diacrylate d'une résine époxy liquide.

14. Une composition selon la revendication 12, caractérisée en ce que le composant (2) est un copolymère de méthacrylate de glycidyle/styrène acrylé ayant au moins deux groupes acryloxy insaturés.

15. Une composition selon la revendication 1, caractérisée en ce qu'elle est essentiellement anhydre et le composant (1) est un produit d'amination contenant une cétimine d'un copolymère d'addition vinylique contenant les motifs d'au moins un acrylate et/ou méthacrylate d'alcoyle en $C_1$—$C_4$ avec une polyamine aliphatique ayant au moins deux groupes amine primaires, la quasitotalité des groupes amine primaires du produit d'amination ayant été transformée en groupes cétimine par réaction avec une cétone aliphatique ou alicyclique en $C_3$ à $C_{10}$ avec élimination de l'eau libérée par la réaction, si bien que la composition est hydrodurcissable lorsqu'on l'applique aux surfaces d'un substrat pour le revêtement, l'adhérence ou l'étanchéité de celui-ci dans des conditions ambiantes de température (20—25°C) et d'humidité relative d'au moins 20%.

16. Une composition selon la revendication 15, caractérisée en ce que la polyamine est l'éthylènediamine et la cétone est la diisopropylcétone.

17. Une composition selon la revendication 15, caractérisée en ce que la polyamine est l'éthylènediamine et la cétone est l'éthylamylcétone.

18. Une composition selon l'une quelconque des revendications précédentes, caractérisée en ce que ladite composition est sous forme d'un système à deux emballages, un emballage contenant le composant (1) et l'autre emballage contenant le composant (2) et un inhibiteur de polymérisation.

19. Une composition selon la revendication 18, caractérisée en ce qu'elle comprend le composant (4) dans l'un des emballages ou les deux, l'emballage contenant le composant (1) comprenant éventuellement de plus un inhibiteur de polymérisation lorsque cet emballage contient un composé du composant (4).

## Patentansprüche

1. Masse, die für Beschichtungs-, Imprägnierungs- und/oder Verbindungszwecke geeignet ist, dadurch gekennzeichnet, daß sie folgende Komponenten aufweist:

(1) wenigstens ein Vinyladditionspolymeres, das eine Vielzahl von Aldimin- oder Ketimingruppen enthält, die an Einheiten in der Polymerkette hängen oder sich an den Enden dieser Kette befinden,

(2) wenigstens einem Material, das wenigstens zwei Acryloxid- oder Methacryloxidgruppen der Formel:

$$H_2C{=}C(R)C(O){-}O{-}$$

enthält, worin R für H oder $CH_3$ steht,

(3) gegebenenfalls wenigstens ein flüchtiges Keton- oder Aldehydstabilisierungsmittel, das 3 bis 10 Kohlenstoffatome enthält und

(4) gegebenenfalls wenigstens eine Verbindung der Formel:

$$H_2C{=}C(R)X$$

worin R für H oder $CH_3$ steht und X eine Elektronen abziehende Gruppe ist.

2. Masse nach Anspruch 1, dadurch gekennzeichnet, daß das Polymere (1) Monomereinheiten mit wenigstens einer der folgenden Formeln enthält:

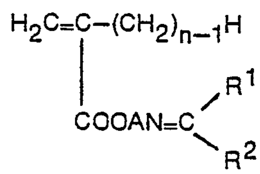

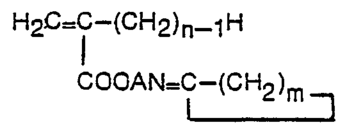

und

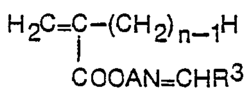

worin

m eine ganze Zahl mit einem Wert von 4 bis 5 ist,

n 1 oder 2 ist,

A eine $C_2$—$C_{12}$-Alkylengruppe bedeutet,

$R^1$ eine ($C_1$—$C_{12}$)Alkyl- oder Cycloalkylgruppe ist,

$R^2$ eine ($C_1$—$C_{12}$)Alkyl- oder Cycloalkylgruppe ist und

$R^3$ Phenyl, Halogenphenyl oder Alkoxyphenyl ist, wobei die Alkoxygruppe 1 bis 4 Kohlenstoffatome aufweist, und

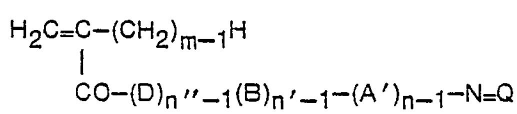

worin

Q aus der Gruppe ausgewählt ist, die aus

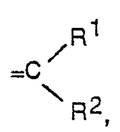

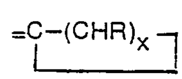 und $=CHR_3$

besteht, wobei

R H ist oder Methyl in einer CHR-Einheit sein kann,

$R^1$ eine ($C_1$—$C_{12}$)Alkylgruppe oder eine Cyclohexylgruppe ist,

$R^2$ eine $(C_1—C_{12})$Alkylgruppe oder eine Cyclohexylgruppe ist,
$R^3$ Phenyl, Halogenphenyl, $(C_1—C_{12})$Alkyl, Cyclohexyl oder $(C_1—C_4)$Alkoxyphenyl ist,
A′, B und D gleiche oder verschiedene Oxyalkylengruppen der Formel

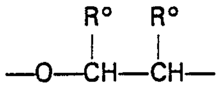

sind, wobei
R° gleich oder verschieden ist und für H oder einen Alkylrest mit 1 bis 2 Kohlenstoffatomen steht,
m 1 oder 2 ist,
x eine ganze Zahl mit einem Wert von 4 bis 5 ist,
n eine ganze Zahl mit einem Wert von 1 bis 200 ist,
n′ eine ganze Zahl mit einem Wert von 1 bis 200 ist und
n″ eine ganze Zahl mit einem Wert von 1 bis 200 ist, wobei die Summe von n-1, n′-1 und n″-1 einen Wert von 2 bis 200 besitzt.

3. Masse nach Anspruch 1, dadurch gekennzeichnet, daß das Polymere (1) hergestellt wird durch Umsetzung eines Polymeren, das eine Vielzahl von primären oder sekundären Amingruppen enthält, mit einem flüchtigen Keton oder Aldehyd, enthaltend 3 bis 10 Kohlenstoffatome.

4. Masse nach Anspruch 3, dadurch gekennzeichnet, daß das Amingruppen enthaltende Polymere hergestellt wird durch Aminolyse eines Polymeren, das Einheiten wenigstens eines $C_1—C_4$-Alkylacrylats und/oder -methacrylats enthält, mit wenigstens einem Polyamin, das wenigstens zwei Aminogruppen enthält, ausgewählt aus primären und sekundären Aminogruppen, wobei deren Stickstoffatome mit aliphatischen Kohlenstoffatomen verknüpft sind.

5. Masse nach Anspruch 3 oder 4, dadurch gekennzeichnet, daß das Aminpolymere Einheiten der Formel

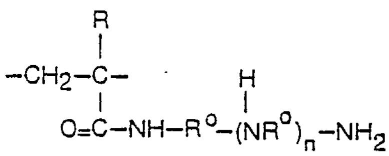

enthält, worin R für eine $C_2$- oder $C_3$-Alkylengruppe steht und n 0, 1, 2 oder 3 ist.

6. Masse nach einem der Ansprüche 1 bis 5, dadurch gekennzeichnet, daß das Polymere (1) ein Zahlenmittel des Molekulargewichts von 600 bis 5000 besitzt.

7. Masse nach einem der Ansprüche 1 bis 6, dadurch gekennzeichnet, daß die Komponente (2) aus wenigstens einer der folgenden Substanzen besteht: Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykoldiacrylat, Trimethylolpropantriacrylat, Pentaerythrittetraacrylat sowie Pentaerythrittriacrylat.

8. Masse nach einem der Ansprüche 1 bis 6, dadurch gekennzeichnet, daß die Komponente (2) aus wenigstens einer der folgenden Verbindungen besteht:

(a) einem einfachen Ester, erhalten durch Umsetzung eines Polyols mit wenigstens zwei Hydroxylgruppen mit Acrylsäure oder Methacrylsäure, vorzugsweise Trimethylolpropantriacrylat oder einem Poly(200)ethylenglykoldimethacrylat,

(b) einem Urethanacrylat und/oder -methacrylat, erhalten durch Umsetzung von wenigstens zwei Isocyanatgruppen eines Polyisocyanats mit einem Hydroxyalkylacrylat und/oder -methacrylat,

(c) einem Polyester mit wenigstens zwei Acrylat- und/oder Methacrylatgruppen, erhalten durch Veresterung von Hydroxygruppen, mit Acrylsäure und/oder Methacrylsäure,

(d) einem polyfunktionellen Acrylat und/oder Methacrylat, erhalten durch Umsetzung eines Hydroxyalkylacrylates und/oder -methacrylats mit (i) einer Dicarbonsäure mit 4 bis 15 Kohlenstoffatomen (ii) einem Polyepoxid mit endständigen Glycidylgruppen oder (iii) einem Polyisocyanat mit endständigen reaktiven Isocyanatgruppen,

(e) einem Acrylat- und/oder Methacrylat-terminierten Polyester hergestellt aus Acrylsäure und/oder Methacrylsäure, einem Polyol mit wenigstens drei Hydroxylgruppen und einer Dicarbonsäure,

(f) einem polyfunktionellen Acrylat und/oder Methacrylat, erhalten durch Umsetzung von Acrylsäure und/oder Methacrylsäure mit wenigstens zwei Epoxygruppen eines epoxidierten trocknenden Öles oder eines epoxidierten trocknenden Ölfettsäureesters oder Amids davon oder einem entsprechenden Alkohol, der wenigstens zwei Epoxygruppen enthält,

(g) einem Urethanderivat oder einem Aminderivat eines polyfunktionellen Acrylats und/oder Methacrylats von (f), erhalten durch Umsetzung eines Isocyanats bzw. Amins mit dem polyfunktionellen Acrylat und/oder Methacrylat, wobei wenigstens zwei Acrylat- und/oder Methacrylatgruppen zurückbleiben,

(h) einem Acrylsäureaddukt an ein epoxidiertes pflanzliches oder tierisches Öl mit 10 oder mehr

Kohlenstoffatomen in der Fettsäurekomponente und einer Unsättigung, die dazu ausreicht, wenigstens zwei Epoxygruppen in dem epoxidierten Öl zur Verfügung zu stellen, wobei das Öl vorzugsweise aus Sojabohnenöl oder Leinsamenöl besteht,

(i) einem Polyacrylat und/oder -methacrylat, erhalten durch Umsetzung von Acrylsäure und/oder Methacrylsäure durch Addition an die Epoxygruppen eines aromatischen Epoxyharzes auf Bisphenolbasis, vorzugsweise einem Diacrylatester eines flüssigen Bisphenol A-Epoxyharzes,

(j) einem Polyacrylat und/oder -methacrylat, erhalten durch Addition von (Meth)acrylsäure an ein flüssiges Vinylpolymeres mit daran hängenden Glycidylgruppen, das auf eine Additionspolymerisation einer Monomermischung aus Glycidylacrylat und/oder -methacrylat, Glycidylvinylether oder Glycidylvinylsulfid zurückgeht,

(k) einem polyfunktionellen Acrylat und/oder Methacrylat, das auf (Meth)acrylsäureanhydrid und ein Polyepoxid zurückgeht,

(l) einem polyfunktionellen Acrylat- und/oder Methacrylaturethanester, erhalten durch Kombination eines Hydroxyalkylacrylats und/oder -methacrylats, eines Diisocyanats und eines Hydroxyfunktionellen Alkydkondensats,

(m) einem Acrylat- und/oder Methacrylat-terminierten Polyester, erhalten durch Umsetzung eines Polycaprolactondiols oder -triols mit einem Diisocyanat, und einem Hydroxyalkylacrylat und/oder -methacrylat und einem Urethanpolyacrylat und/oder -methacrylat, erhalten durch Umsetzung eines Hydroxyl enthaltenden Esters eines Polyols mit Acrylsäure und/oder Methacrylsäure und einem Polyisocyanat.

9. Masse nach einem der vorhergehenden Ansprüche, dadurch gekennzeichnet, daß die relative Menge der Komponente (2) zu der Komponente (1), bezogen jeweils auf die Acryloxy- und Methacryloxyunsättigungsäquivalenz von (2) und die potentielle primäre und sekundäre Aminstickstoffäquivalenz von (1) derart ist, daß 0,5 bis 3,5 Äquivalente von (2) pro Äquivalent von (1) zur Verfügung stehen.

10. Masse nach einem der Ansprüch 1 bis 9, dadurch gekennzeichnet, daß die Komponente (3) aus Ethylamylketon oder Diisopropylketon besteht.

11. Masse nach einem der Ansprüche 1 bis 10, dadurch gekennzeichnet, daß die Komponente (4) aus wenigstens einer Verbindung der Formel:

$$CH_2{=}C(R)X$$

besteht, worin R für H oder $CH_3$ steht und X CN, $CONR^2R^3$ oder $COOR^4$ bedeutet, wobei $R^2$ H oder $C_1$—$C_{20}$-Alkyl ist, $R^3$ H oder $C_1$—$C_{20}$-Alkyl ist und $R^4$ $C_1$—$C_{20}$-Alkyl ist, das mit Halogenatomen substituiert sein kann.

12. Masse nach Anspruch 2, dadurch gekennzeichnet, daß die Komponente (1) ein Copolymeres von Diisopropylketiminoethylmethacrylat ist.

13. Masse nach Anspruch 12, dadurch gekennzeichnet, daß die Komponente (2) ein Diacrylatester eines flüssigen Epoxyharzes ist.

14. Masse nach Anspruch 12, dadurch gekennzeichnet, daß die Komponente (2) aus einem acrylierten Glycidylmethacrylat/Styrol-Copolymeren mit wenigstens zwei ungesättigten Acryloxygruppen besteht.

15. Masse nach Anspruch 1, dadurch gekennzeichnet, daß sie im wesentlichen wasserfrei ist und die Komponente (1) ein Ketimin enthaltendes Amidationsprodukt eines Vinyladditionscopolymeren, das Einheiten wenigstens eines $C_1$—$C_4$-Alkylacrylats und/oder -methacrylats enthält, mit einem aliphatischen Polyamin mit wenigstens zwei primären Amingruppen ist, wobei im wesentlichen alle primären Amingruppen in dem Amidationsprodukt in Ketimingruppen durch Reaktion mit einem aliphatischen oder alicyclischen $C_3$—$C_{10}$-Keton und Entfernung des durch die Reaktion freigesetzten Wassers umgewandelt worden sind, und wobei die Masse bei einem Aufbringen auf Oberflächen eines Substrats zu seiner Beschichtung, zu seinem Verbinden oder zu seinem Abdichten unter Umgebungsbedingungen bezüglich Temperatur (20 bis 25°C) und einer relativen Feuchtigkeit von wenigstens 20% hydrohärtbar ist.

16. Masse nach Anspruch 15, dadurch gekennzeichnet, daß das Polyamin aus Ethylendiamin und das Keton aus Diisopropylketon besteht.

17. Masse nach Anspruch 15, dadurch gekennzeichnet, daß das Polyamin aus Ethylendiamin und das Keton aus Ethylamylketon besteht.

18. Masse nach einem der vorhergehenden Ansprüche, dadurch gekennzeichnet, daß sie in Form eines aus zwei Packungen bestehenden Systems vorliegt, wobei eine Packung die Komponente (1) und die andere Packung die Komponente (2) und einem Polymerisationsinhibitor enthält.

19. Masse nach Anspruch 18, dadurch gekennzeichnet, daß sie die Komponente (4) in einer oder in beiden Packungen enthält, wobei die Packung, die die Komponente (1) enthält, gegebenenfalls außerdem den Polymerisationsinhibitor enthält, wenn diese Packung eine Verbindung der Komponente (4) aufweist.